# EUROPÄISCHE PATENTSCHRIFT

(11) **EP 3 787 182 B1**
(45) Veröffentlichungstag und Bekanntmachung des Hinweises auf die Patenterteilung: **04.12.2024**
(21) Anmeldenummer: 20188314.7
(22) Anmeldetag: 29.07.2020
(51) Int. Cl.: H02P 29/024, H02P 29/028, H02P 27/06, H02P 23/20, H02P 21/36, H02P 23/06, D06F 34/10, H02M 1/32, H02M 1/36, G01R 31/40, H02M 1/12, H02M 1/42

(54) **UMRICHTER-ELEKTRONIK MIT GLEICHSTROMMOTOR UND WÄSCHEPFLEGEGERÄT DAMIT**
INVERTER ELECTRONICS WITH DC MOTOR AND LAUNDRY CARE APPLIANCE COMPRISING THE SAME
ÉLECTRONIQUE D'ONDULEUR AVEC MOTEUR À COURANT CONTINU ET APPAREIL D'ENTRETIEN DU LINGE L'UTILISANT

(30) Priorität: 29.08.2019 DE 102019212969
(43) Veröffentlichungstag der Anmeldung: 03.03.2021
(73) Patentinhaber: BSH Hausgeräte GmbH, 81739 München (DE)
(72) Erfinder: Skrippek, Jörg, 14641 Wustermark (DE); Albayrak, Hasan Gökcer, 14476 Potsdam (DE); Brixner, Christian, 10719 Berlin (DE); Deckert, Patrick, 14943 Luckenwalde (DE)

(56) Entgegenhaltungen:
- JP-A- 2014 094 165
- KR-A- 20190 010 989
- US-A1- 2012 098 475
- US-A1- 2018 226 894

## Beschreibung

Die vorliegende Erfindung betrifft ein Wäschepflegegerät mit Gleichstrommotor und Umrichter-Elektronik, welche zwei Gleichstrom-Zwischenspannungsschaltkreise zum Gleichrichten der Netzspannung und einen Spannungsregler umfasst. Insbesondere betrifft die Erfindung ein Netzspannungsmesssystem in BLDC (bürstenloser Gleichstrommotor) bzw. PMSM (Permanentmagnet erregter Synchronmotor) Invertern.

Die Offenlegungsschrift US 2012/098475 A1 offenbart einen Umrichter.

Die Offenlegungsschrift JP 2014 094165 A offenbart eine Waschmaschine.

Die Offenlegungsschrift US 2018/226894 A1 offenbart ein schaltbares Netzteil.

Die Offenlegungsschrift KR 2019 0010989 A offenbart eine Klimaanlage.

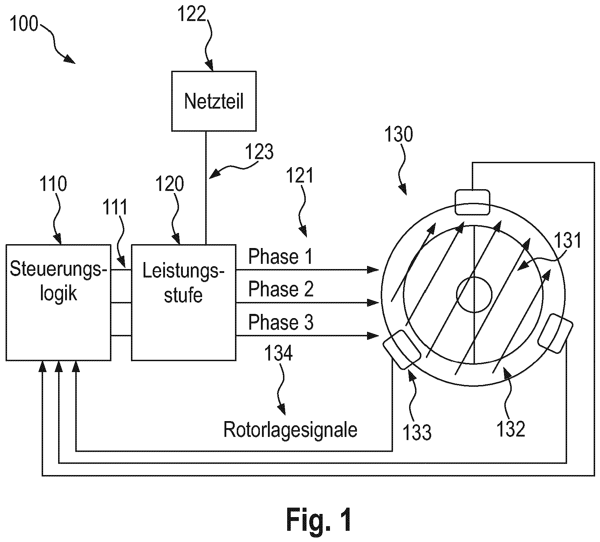

Figur 1 zeigt einen Mehrphasen-Gleichstrommotor 100, der in einem Wäschepflegegerät eingesetzt werden kann. Auf der rechten Seite des Bildes sieht man einen schematischen Querschnitt durch den Motor 130 mit Permanentmagneten 131 (z.B. zwei-polig) in der Mitte, einer dreiphasigen Wicklung 132 und drei Lagesensoren (z.B. Hallsensoren) 133, die um 120° versetzt angeordnet sind. Auf der linken Seite ist die Steuerungslogik 110 und die Leistungsstufe 120 dargestellt. Die Steuerungslogik 110 evaluiert die Signale 134 der Lage-Sensoren 133 und bestimmt die Phasen-Ansteuersignale 111 zur Ansteuerung des Motors 140. Die Leistungsstufe 120 sorgt für die Umwandlung der Netzspannung in die entsprechenden Phasen-Gleichspannungssignale 121 zur Ansteuerung der drei Phasen 121 des Motors 130. Zur Umwandlung der Netzspannung 123, welche z.B. durch ein Netzteil 122 bereitgestellt wird, in Gleichspannung werden Umrichter bzw. Inverter eingesetzt, welche Brückenschaltungen aus mehreren Dioden umfassen, um den Wechselstrom aus dem Netz in Gleichstrom für den Motor umzuwandeln. Beispielsweise kann für jede Phase eine Brückenschaltung mit 4 Dioden (B2-Schaltung) eingesetzt werden.

Eine Überwachungs-/Messschaltung der Eingangsnetzspannung überwacht die Inverter-Elektronik 110, 120 für BLDC bzw. PMSM Motoren. Die Überwachungs-/Messschaltung stellt einen Kontrollmesspunkt bzw. ein Kontrollsignal für die Anwendung in einem Umrichter bereit. Die Netzspannungsmessung im Umrichter ist hinreichend bekannt, hat jedoch die im Folgenden beschriebenen Nachteile: 1. Der Wert der Netzspannung wird auf Basis einer Zwischenkreisspannungsmessung abgeleitet. Dies funktioniert für den motorischen Betrieb des Motors, nicht jedoch für den generatorischen Betrieb des Motors, da die Zwischenkreisspannung in diesem Fall ansteigt und somit der Netzspannungswert verfälscht wird. 2. Eine direkte Messung der Netzspannung vor der Gleichrichterbrücke führt wiederum dazu, dass durch last- und betriebsabhängige Eigenschaften der vorhandenen PFC-Drossel die Netzspannungsmessung ebenfalls verfälscht wird, da bauteilspezifische Effekte im generatorischen Betrieb zum Tragen kommen. 3. Dadurch kann, bei Permanent-Magnet- erregten Mehrphasen-Motoren (BLDC oder PMSM) im generatorischen Betrieb, eine gute Zwischenkreisspannungs-Stabilisierung bzw. ein gutes Regelverhalten nicht von Softwarelösungen gewährleistet werden, weil die regelungstechnischen Verfahren eine genaue Netzspannungsmessung fordern, um ein gutes Regelverhalten und genaue Schutzfunktionen zu gewährleisten.

Eine Zwischenkreisspannungsstabilisierung zur Vermeidung einer Überspannung und einem möglichen Schaden an der Elektronik kann durch eine verfälschte Netzspannungsmessung nicht gewährleistet werden, da die Netzspannung zur Plausibilisierung erforderlich ist.

Es ist die der Erfindung zugrundeliegende Aufgabe, eine Umrichter-Elektronik für einen Antrieb eines Wäschepflegegeräts und ein entsprechendes Wäschepflegegerät bereitzustellen, welche in der Lage ist, die Netzspannung möglichst genau zu messen, um die oben genannten Probleme einer verfälschten Netzspannungsmessung, d.h. Überspannung und mögliche Schäden an der Elektronik, insbesondere im generatorischen Betrieb des Motors, zu vermeiden.

Diese Aufgabe wird durch die Gegenstände mit den Merkmalen nach dem unabhängigen Anspruch gelöst. Vorteilhafte Ausführungsformen sind Gegenstand der abhängigen Ansprüche, der Beschreibung und der Zeichnungen.

Eine wesentliche Idee der Erfindung besteht darin, die Netzeingangsspannungsmessung nicht auf Basis des Zwischenkreiskondensators des Leistungsteils (motorseitig), sondern auf Basis des Zwischenkreiskondensators des Schaltnetzteiles (steuerseitig), welches die Betriebskleinspannungen bereitstellt, durchzuführen. Falls kein Schaltnetzteil (SNT) Zwischenkreis vorgesehen ist, kann eine unabhängige Gleichrichterbrücke mit einer Kleinlast und Messbeschaltung an dieser Gleichrichterbrücke vorgesehen werden. Somit entgeht man den Koppeleffekten des generatorischen Betriebes des Motors im Leistungsteil.

Die Erfindung ist dadurch gekennzeichnet, dass die Elektronik die folgenden Merkmale aufweist:
- Zwei unabhängige DC-Zwischenkreisspannungskreise;
- eine DC-Zwischenkreisspannung zur Motoransteuerung (mit entsprechender Leistung) verwendet wird.
- eine zweite DC-Zwischenkreisspannung mit geringer Leistung zur Bereitstellung der Betriebskleinspannungen durch ein Schaltnetzteil verwendet wird.
- Die Netzspannungsmessung aus der Messbeschaltung, die an dem Zwischenkreis des Schaltnetzteiles angeschlossen ist, generiert wird.
- Eine Netzversorgungsschaltung mit DC-Spannungsverdoppler Netzspannungen von 120 VAC ebenfalls gewährleistet (Gleichbrückenschaltungstopologie für Schaltnetzteile mit 120 VAC).
- Zur Kontrolle des ordnungsgemäßen Schaltens wird das Umschalten dieses Ladekreises über die Spannungsmessdifferenz zwischen Messpunkt Netzspannungsmessung (1) und Netzspannungsmessung (2) sichergestellt (Relaiskontakt).
- die Zwischenkreisspannung wird direkt gemessen.
- Die Netzspannung wird über die Netzspannungsmessung (3) direkt ohne Einfluss des Motors gemessen (für Motor- und Generatorbetrieb).
- Die Kontrollsignalspannungen werden über analoge A/D Eingänge des Mikrocontrollers oder über eine Auswerteelektronik erfasst.

Damit sind die folgenden technischen Vorteile verbunden: Es ist kein direktes Hardwarekontrollsignal mehr notwendig. Die Zwischenkreisspannung kann softwareseitig besser stabilisiert werden. Es entsteht keine Überspannung mehr in der Elektronik und damit kommt es zu keinem Schaden in der Elektronik. Ferner stellt sich eine längere Lebensdauer des Zwischenkreiskondensators ein.

Die nachfolgend beschriebenen Geräte und Vorrichtungen können von verschiedener Art sein. Beispielsweise kann es sich bei den hier beschriebenen Wäschepflegegeräten um programmgesteuerte Haushalts- oder Haushaltsgeräte, Waschmaschinen, Wäschetrockner, kombinierte Wasch-/Trockenmaschinen, Trockenschränke usw. handeln. Die einzelnen beschriebenen Steuerelemente können durch Hardware- oder Softwarekomponenten, beispielsweise elektronische Komponenten, realisiert sein und verschiedene Technologien umfassen, wie beispielsweise Halbleiterchips, ASICs, Mikroprozessoren, digitale Signalprozessoren, integrierte elektrische Schaltungen, elektrooptische Schaltungen und/oder passive Komponenten.

Die nachfolgend beschriebenen Geräte und Vorrichtungen können Gleichstrom-Motoren umfassen, insbesondere BLDC oder PMSM Motoren. Der bürstenlose Gleichstrommotor (BLDC-Motor) ist aufgebaut wie eine Drehstrom-Synchronmaschine mit Erregung durch Permanentmagnete. Die oft dreisträngige Drehstromwicklung wird durch eine geeignete Schaltung so angesteuert, dass sie ein drehendes magnetisches Feld erzeugt, welches den permanenterregten Rotor mitzieht. Das Regelverhalten ähnelt weitgehend einer Gleichstrom-Nebenschlussmaschine. Bei BLDC-Motoren ist der Rotor mit Permanentmagneten bestückt und der feststehende Stator umfasst die Spulen. Neben dem Innenläufer findet auch der Aufbau als Außenläufer häufig Anwendung. Die Auslegung der Wicklung erfolgt üblicherweise als dreiphasiges System und je nach Drehzahlbereich mit niedriger bis sehr hoher Polzahl. Der PMSM-Motor ist eine Einphasen- oder Drehstrom-Synchronmaschine, bei der ein konstant magnetisierter Läufer (Rotor) synchron von einem bewegten magnetischen Drehfeld im Stator mitgenommen wird. Der laufende Synchronmotor hat eine zur Wechselspannung synchrone Bewegung. Die Drehzahl ist also über die Polpaarzahl mit der Frequenz der Wechselspannung verknüpft. Das Feld im Läufer wird durch Permanentmagnete erzeugt. Die Statorspulen werden insbesondere bei großen Synchronmaschinen manchmal durch einen Frequenzumrichter mit einem passenden, gesteuerten Wechselstrom betrieben. Damit sind drehzahlvariable Antriebe großer Leistung realisierbar.

Gemäß einem ersten Aspekt wird die erfindungsgemäße Aufgabe durch ein Wäschepflegegerät mit Gleichstrommotor und Umrichter-Elektronik gelöst, wobei die Umrichter-Elektronik Folgendes umfasst: einen Netzversorgungsschaltkreis zum Versorgen des Wäschepflegegeräts mit einer Netzspannung; einen ersten Gleichstrom-Zwischenspannungsschaltkreis, der ausgebildet ist, die Netzspannung in eine erste Zwischenkreisspannung zur Versorgung einer Leistungsstufe zur Phasensteuerung des Gleichstrommotors gleichzurichten; einen zweiten Gleichstrom-Zwischenspannungsschaltkreis, der ausgebildet ist, die Netzspannung in eine zweite Zwischenkreisspannung zur Versorgung eines Schaltnetzteils zum Bereitstellen von Betriebsspannungen für eine Steuerungslogik zum Ansteuern der Leistungsstufe gleichzurichten; und einen Spannungsregler, der ausgebildet ist, den ersten Gleichstrom-Zwischenspannungsschaltkreis basierend auf einem Messwert der Netzspannung zu regeln und den Messwert der Netzspannung auf Basis des zweiten Gleichstrom-Zwischenspannungsschaltkreises zu bestimmen.

Dadurch wird der technische Vorteil erreicht, dass sich die erste Zwischenkreisspannung zur Versorgung einer Leistungsstufe besser stabilisieren lässt, so dass keine Überspannung mehr in der Elektronik entsteht und es zu keinem Schaden in der Elektronik kommt. Ferner stellt sich eine längere Lebensdauer des ersten Zwischenspannungsschaltkreises ein.

In einer vorteilhaften Ausführungsform des Wäschepflegegeräts ist der Gleichstrommotor ein Permanent-Magnet erregter Mehrphasenmotor, insbesondere ein Permanent-Magnet erregter Synchronmotor, PMSM, oder ein bürstenloser Gleichstrommotor, BLDC, und die Umrichter-Elektronik umfasst eine Inverter-Elektronik für den Permanent-Magnet erregten Mehrphasenmotor.

Dadurch wird der technische Vorteil erreicht, dass die Umrichter-Elektronik diese häufig vorkommenden DC-Motoren auf einfache Weise stabilisieren kann, so dass sie im Motorbetrieb und im Generatorbetrieb stabil laufen, ohne dass es zu gefährlichen Überspannungen kommt.

In einer vorteilhaften Ausführungsform des Wäschepflegegeräts ist der Spannungsregler ausgebildet, den Messwert der Netzspannung sowohl im motorischen Betrieb als auch im generatorischen Betrieb des Gleichstrommotors zu bestimmen.

Dadurch wird der technische Vorteil erreicht, dass der Spannungsregler ein stabiles Verhalten des Motors sowohl im motorischen Betrieb als auch im generatorischen Betrieb gewährleistet.

Erfindungsgemäß umfasst der zweite Gleichstrom-Zwischenspannungsschaltkreis einen Zwischenkreiskondensator zur Glättung der zweiten Zwischenkreisspannung.

Dadurch wird der technische Vorteil erreicht, dass die zweite Zwischenkreisspannung aufgrund der Glättung genauer bestimmbar ist und keine starken Schwankungen aufweist.

In einer vorteilhaften Ausführungsform des Wäschepflegegeräts ist der Spannungsregler ausgebildet, den ersten Gleichstrom-Zwischenspannungsschaltkreis basierend auf einem Spannungsabfall an dem Zwischenkreiskondensator des zweiten Gleichstrom-Zwischenspannungsschaltkreises zu regeln.

Dadurch wird der technische Vorteil erreicht, dass am Zwischenkreiskondensator des zweiten Gleichstrom-Zwischenspannungsschaltkreises sich ein genauerer Messwert für die Netzspannung ausbildet, der auch geringeren Schwankungen unterworfen ist, als am Zwischenkreiskondensator des ersten Gleichstrom-Zwischenspannungsschaltkreises.

In einer vorteilhaften Ausführungsform des Wäschepflegegeräts umfasst die Umrichter-Elektronik einen Widerstandsteiler, der ausgebildet ist, einen Spannungsabfall an dem Zwischenkreiskondensator des zweiten Gleichstrom-Zwischenspannungsschaltkreises zu bestimmen.

Dadurch wird der technische Vorteil erreicht, dass mit diesem hochohmigen Widerstandsteiler sich auf einfache Art und Weise ein Messwert der Netzspannung bestimmen lässt.

In einer vorteilhaften Ausführungsform des Wäschepflegegeräts ist der zweite Gleichstrom-Zwischenspannungsschaltkreis von dem ersten Gleichstrom-Zwischenspannungsschaltkreis elektrisch entkoppelt.

Dadurch wird der technische Vorteil erreicht, dass Unregelmäßigkeiten des ersten, d.h. motorseitigen Gleichstrom-Zwischenspannungsschaltkreis sich nicht auf den zweiten Gleichstrom-Zwischenspannungsschaltkreis auf der Seite des Schaltnetzteils auswirken und daher die Netzspannung sehr genau bestimmt werden kann ohne störende Einflüsse des Motorbetriebs.

In einer vorteilhaften Ausführungsform des Wäschepflegegeräts umfasst die Umrichter-Elektronik einen ersten Ladekreis zum Laden einer ersten Phase des Gleichstrommotors, verfügt die Umrichter-Elektronik über ein Relais zur Steuerung eines Umschaltens des ersten Ladekreises; und ist die Umrichter-Elektronik ausgebildet, das Umschalten des ersten Ladekreises basierend auf einer Spannungsdifferenz am Relais zu überwachen.

Dadurch wird der technische Vorteil erreicht, dass das Umschalten der Phasenströme des Motors vom ersten Ladekreis zum zweiten und dritten Ladekreis genau ausgeführt werden kann, da die Netzspannung über die Spannungsdifferenz am Relais genau gemessen werden kann.

In einer vorteilhaften Ausführungsform des Wäschepflegegeräts umfasst die Umrichter-Elektronik einen Mikrocontroller, der ausgebildet ist, die Spannungsdifferenz am Relais zu bestimmen und auszuwerten.

Dadurch wird der technische Vorteil erreicht, dass der Mikrokontroller die gemessene Netzspannung, welche zuvor über einen A/D-Wandler in einen digitalen Wert umgewandelt wird, sehr effektiv auswerten kann, um die phasengenaue Bestromung des Motors zu bewirken.

In einer vorteilhaften Ausführungsform des Wäschepflegegeräts ist ein erster Kontakt des Relais über eine PFC-Drossel mit dem Netzversorgungsschaltkreis gekoppelt; und ist ein zweiter Kontakt des Relais mit dem ersten Gleichstrom-Zwischenspannungsschaltkreis gekoppelt.

Dadurch wird der technische Vorteil erreicht, dass der Messwert der Netzspannung den Abfall der Spannung an der PFC-Drossel berücksichtigt und dieser im Spannungsregler ausgeglichen werden kann.

In einer vorteilhaften Ausführungsform des Wäschepflegegeräts umfasst die Umrichter-Elektronik einen ersten Messschaltkreis zur Netzspannungsmessung am ersten Kontakt des Relais und einen zweiten Messschaltkreis zur Netzspannungsmessung am zweiten Kontakt des Relais; und ist die Umrichter-Elektronik ausgebildet, das Umschalten des ersten Ladekreises basierend auf einer Differenz der mit beiden Messschaltkreisen gemessenen Netzspannungen zu überwachen.

Dadurch wird der technische Vorteil erreicht, dass zwei Messungen die Genauigkeit der Messung der Netzspannung erhöhen.

In einer vorteilhaften Ausführungsform des Wäschepflegegeräts umfasst die Umrichter-Elektronik einen dritten Messschaltkreis zur Netzspannungsmessung am zweiten Gleichstrom-Zwischenspannungsschaltkreis; und ist die Umrichter-Elektronik ausgebildet, das Umschalten des ersten Ladekreises ferner basierend auf der mit dem dritten Messschaltkreis gemessenen Netzspannung zu überwachen.

Dadurch wird der technische Vorteil erreicht, dass mit dem dritten Messschaltkreis zur Netzspannungsmessung am zweiten Gleichstrom-Zwischenspannungsschaltkreis sich eine höhere Genauigkeit erzielen lässt als mit dem ersten und zweiten Messschaltkreis am motorseitigen ersten Gleichstrom-Zwischenspannungsschaltkreis.

In einer vorteilhaften Ausführungsform des Wäschepflegegeräts umfasst die Umrichter-Elektronik einen vierten Messschaltkreis zur Netzspannungsmessung am ersten Gleichstrom-Zwischenspannungsschaltkreis; und ist die Umrichter-Elektronik ausgebildet, die mit dem vierten Messschaltkreis gemessene Netzspannung basierend auf der mit dem dritten Messschaltkreis gemessenen Netzspannung zu stabilisieren.

Dadurch wird der technische Vorteil erreicht, dass die mit dem dritten Messschaltkreis gemessenen Netzspannung sehr genau ist im Vergleich zu den anderen Messschaltkreisen und sich daher besonders dazu eignet, die mit den anderen Messschaltkreisen gemessenen Netzspannungen zu stabilisieren bzw. zu regeln.

In einer vorteilhaften Ausführungsform des Wäschepflegegeräts umfassen die vier Messschaltkreise jeweils einen Widerstandsteiler zur Bestimmung eines jeweiligen Messwertes der Netzspannung.

Dadurch wird der technische Vorteil erreicht, dass mit diesen hochohmigen Widerstandsteilern sich auf einfache Art und Weise der jeweilige Messwert der Netzspannung bestimmen lässt.

Gemäß einem zweiten Aspekt wird die erfindungsgemäße Aufgabe durch eine Umrichter-Elektronik für ein Wäschepflegegerät mit Gleichstrommotor, wobei die Umrichter-Elektronik Folgendes umfasst: einen Netzversorgungsschaltkreis zum Versorgen des Wäschepflegegeräts mit einer Netzspannung; einen ersten Gleichstrom-Zwischenspannungsschaltkreis, der ausgebildet ist, die Netzspannung in eine erste Zwischenkreisspannung zur Versorgung einer Leistungsstufe zur Phasensteuerung des Gleichstrommotors gleichzurichten; einen zweiten Gleichstrom-Zwischenspannungsschaltkreis, der ausgebildet ist, die Netzspannung in eine zweite Zwischenkreisspannung zur Versorgung eines Schaltnetzteils zum Bereitstellen von Betriebsspannungen für eine Steuerungslogik zum Ansteuern der Leistungsstufe gleichzurichten; und einen Spannungsregler, der ausgebildet ist, den ersten Gleichstrom-Zwischenspannungsschaltkreis basierend auf einem Messwert der Netzspannung zu regeln und den Messwert der Netzspannung auf Basis des zweiten Gleichstrom-Zwischenspannungsschaltkreises zu bestimmen.

Dadurch wird der technische Vorteil erreicht, dass sich die erste Zwischenkreisspannung zur Versorgung einer Leistungsstufe besser stabilisieren lässt, so dass keine Überspannung mehr in der Elektronik entsteht und es zu keinem Schaden in der Elektronik kommt. Ferner stellt sich eine längere Lebensdauer des ersten Zwischenspannungsschaltkreises ein.

Gemäß einem dritten Aspekt wird die erfindungsgemäße Aufgabe durch ein Verfahren zum Betreiben eines Wäschepflegegeräts mit Gleichstrommotor und Umrichter-Elektronik gelöst, wobei das Verfahren die folgenden Schritte aufweist: Versorgen des Wäschepflegegeräts mit einer Netzspannung durch einen Netzversorgungsschaltkreis; Gleichrichten der Netzspannung in eine erste Zwischenkreisspannung zur Versorgung einer Leistungsstufe zur Phasensteuerung des Gleichstrommotors, durch einen ersten Gleichstrom-Zwischenspannungsschaltkreis; Gleichrichten der Netzspannung in eine zweite Zwischenkreisspannung zur Versorgung eines Schaltnetzteils zum Bereitstellen von Betriebsspannungen für eine Steuerungslogik zum Ansteuern der Leistungsstufe, durch einen ersten Gleichstrom-Zwischenspannungsschaltkreis; Regeln des ersten Gleichstrom-Zwischenspannungsschaltkreises basierend auf einem Messwert der Netzspannung, durch einen Spannungsregler; und Bestimmen des Messwertes der Netzspannung auf Basis des zweiten Gleichstrom-Zwischenspannungsschaltkreises, durch den Spannungsregler.

Dadurch wird der technische Vorteil erreicht, dass das Verfahren in einer Umrichter-Elektronik für ein Wäschepflegegerät mit Gleichstrommotor eingesetzt werden kann. Ferner lässt sich die erste Zwischenkreisspannung zur Versorgung einer Leistungsstufe besser stabilisieren, so dass keine Überspannung mehr in der Elektronik entsteht und es zu keinem Schaden in der Elektronik kommt. Ferner stellt sich beim Betreiben eines solchen Verfahrens eine längere Lebensdauer des ersten Zwischenspannungsschaltkreises ein.

Ausführungsbeispiele der Erfindung sind in den Zeichnungen dargestellt und werden im Folgenden näher beschrieben.

Es zeigen:
- Fig. 1: eine schematische Darstellung eines 3-phasigen Elektromotors 100 mit zugehöriger Beschaltung;
- Fig. 2: einen Schaltplan einer Umrichter-Elektronik 200 eines Permanentmagneterregten Mehrphasen Elektromotors mit Netzspannungsmessung am DC-Zwischenspannungsschaltkreis des Leistungsteils gemäß einer beispielhaften Ausführungsform;
- Fig. 3: einen Schaltplan einer Umrichter-Elektronik 300 eines Permanentmagneterregten Mehrphasen Elektromotors mit Netzspannungsmessung am DC-Zwischenspannungsschaltkreis des Schaltnetzteils gemäß einer beispielhaften Ausführungsform;
- Fig. 4: ein Blockschaltbild einer Umrichter-Elektronik 400 eines Permanentmagnet- erregten Mehrphasen Elektromotors mit verschiedenen Messpunkten zur Messung der Netzspannung gemäß einer beispielhaften Ausführungsform;
- Fig. 5: einen Schaltplan eines Netzversorgungsschaltkreises 410 in der Umrichter-Elektronik 400 aus Fig. 4 gemäß einer beispielhaften Ausführungsform;
- Fig. 6: einen Schaltplan eines dritten Ladekreises 423 in der Umrichter-Elektronik 400 aus Fig. 4 gemäß einer beispielhaften Ausführungsform;
- Fig. 7: einen Schaltplan eines zweiten Ladekreises 422 in der Umrichter-Elektronik 400 aus Fig. 4 gemäß einer beispielhaften Ausführungsform;
- Fig. 8: einen Schaltplan einer PFC-Drossel 450 in der Umrichter-Elektronik 400 aus Fig. 4 gemäß einer beispielhaften Ausführungsform;
- Fig. 9: einen Schaltplan eines zweiten Zwischenkreises 432 in der Umrichter-Elektronik 400 aus Fig. 4 gemäß einer beispielhaften Ausführungsform;
- Fig. 10: einen Schaltplan eines Schaltnetzteils 470 in der Umrichter-Elektronik 400 aus Fig. 4 gemäß einer beispielhaften Ausführungsform;
- Fig. 11: einen Schaltplan eines ersten Zwischenkreises 431 in der Umrichter-Elektronik 400 aus Fig. 4 gemäß einer beispielhaften Ausführungsform;
- Fig. 12: einen Schaltplan eines ersten Ladekreises 421 in der Umrichter-Elektronik 400 aus Fig. 4 gemäß einer beispielhaften Ausführungsform;
- Fig. 13: einen Schaltplan eines Messschaltkreises 441, 442, 443, 444 zur Messung der Netzspannung an unterschiedlichen Messpunkten in der Umrichter-Elektronik 400 aus Fig. 4 gemäß einer beispielhaften Ausführungsform;
- Fig. 14 a) - d): vier Diagramme, welche die Verfälschung der Netzspannungsmessung in Abhängigkeit der Motorlast bei Nutzung bekannter Messschaltungen zur Netzspannungsmessung aufzeigen;
- Fig. 15 a), b): zwei Diagramme, welche die Unterschiede einer Netzspannungsmessung am DC-Zwischenkreis des Leistungsteils mit bekannten Messschaltungen gegenüber einer Netzspannungsmessung am DC-Zwischenkreis des Schaltnetzteils gemäß Ausführungsformen der Erfindung verdeutlichen; und
- Fig. 16: eine schematische Darstellung eines Wäschepflegegeräts 1600 mit einem Elektromotor 100, wie oben zu Figur 1 beschrieben, gemäß einer beispielhaften Ausführungsform.

Fig. 1 zeigt eine schematische Darstellung eines 3-phasigen Elektromotors 100 mit zugehöriger Beschaltung. Wie bereits im einleitenden Teil beschrieben, sieht man auf der rechten Seite des Bildes einen schematischen Querschnitt durch den Motor 130 mit Permanentmagneten 131 (z.B. zwei-polig) in der Mitte, einer dreiphasigen Wicklung 132 und drei Lagesensoren (z.B. Hallsensoren) 133, die um 120° versetzt angeordnet sind. Auf der linken Seite ist die Steuerungslogik 110 und die Leistungsstufe 120 dargestellt. Die Steuerungslogik 110 evaluiert die Signale 134 der Lage-Sensoren 133 und bestimmt die Phasen-Ansteuersignale 111 zur Ansteuerung des Motors 140. Die Leistungsstufe 120 sorgt für die Umwandlung der Netzspannung in die entsprechenden Phasen-Gleichspannungssignale 121 zur Ansteuerung der drei Phasen 121 des Motors 130. Zur Umwandlung der Netzspannung 123, welche z.B. durch ein Netzteil 122 bereitgestellt wird, in Gleichspannung werden Umrichter bzw. Inverter eingesetzt, welche Brückenschaltungen aus mehreren Dioden umfassen, um den Wechselstrom aus dem Netz in Gleichstrom für den Motor umzuwandeln. Beispielsweise kann für jede Phase eine Brückenschaltung mit 4 Dioden (B2-Schaltung) eingesetzt werden. Ausführungsbeispiele solcher Umrichter- bzw. Inverter-Schaltungen werden im Folgenden näher beschrieben.

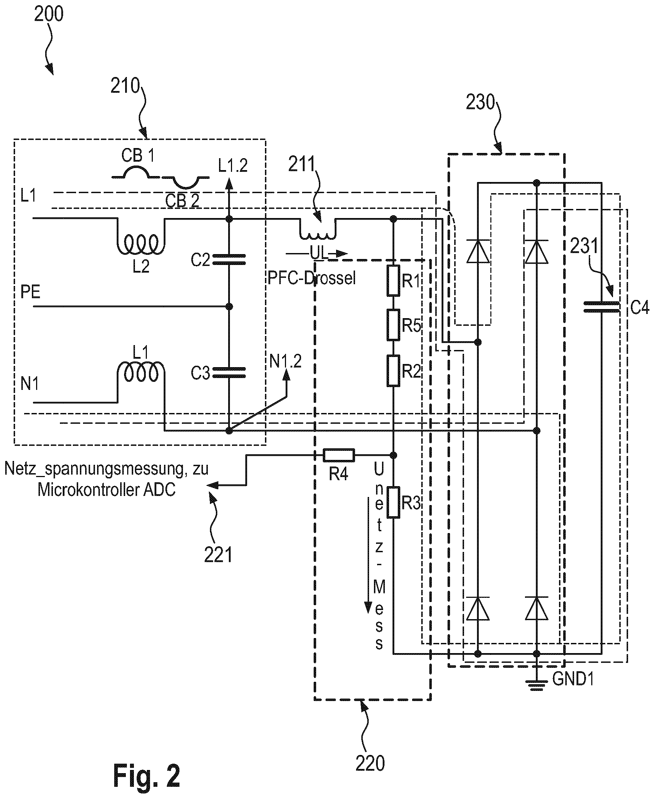

Fig. 2 zeigt einen Schaltplan einer Umrichter-Elektronik 200 eines Permanentmagneterregten Mehrphasen Elektromotors mit Netzspannungsmessung am DC-Zwischenspannungsschaltkreis des Leistungsteils gemäß einer beispielhaften Ausführungsform.

Die Umrichter-Elektronik 200 umfasst eine Netzversorgungsschaltung 210, eine PFC-Drossel 211, eine Gleichrichterbrücke 230 mit Glättungskondensator 231 und einen Widerstandsteiler zum Messen der Netzspannung. Die Netzversorgungsschaltung 210 umfasst drei Leitungen, einen L1-Leiter bzw. erste Phase des stromführenden Leiters, einen N1-Leiter bzw. Neutralleiter zur ersten Phase und einen PE-Leiter zur Erdung. Der L1-Leiter wird über eine Spule L2 zum Ausgang L1.2 geführt. Der N1-Leiter wird über eine Spule L1 zum Ausgang N1.2 geführt. Der PE-Leiter wird über einen Kondensator C2 zum Ausgang L1.2 und einen Kondensator C3 zum Ausgang N1.2 geführt. An den Ausgang L1.2 ist die PFC-Drossel geschaltet und zwischen dem Ausgang der PFC-Drossel und dem Ausgang N1.2 ist die Gleichrichterbrücke 230 in Form einer B2-Schaltung geschaltet. An diesen beiden Punkten ist auch der Widerstandsteiler 220 zur Messung der Netzspannung geschaltet. Der Widerstandsteiler umfasst eine Serienschaltung mit den Widerständen R1, R5, R2, R3, wobei ein Abgriff zwischen R2 und R3 realisiert ist, über den via R4 ein Messwert der Netzspannung 221 bestimmt werden kann. Der Messwert 221 wird zu einem Microcontroller ADC geführt, um für eine geeignete Regelung der Umrichter zu sorgen.

Der Wert der Netzspannung wird hier auf Basis der Zwischenkreisspannungsmessung abgeleitet. Dies funktioniert zwar meist für den motorischen Betrieb des Motors, nicht jedoch für den generatorischen Betrieb des Motors, da die Zwischenkreisspannung in diesem Fall ansteigt und somit den Netzspannungswert 221 verfälscht. Eine direkte Messung der Netzspannung vor der Gleichrichterbrücke 230 führt wiederum dazu, dass durch last- und betriebsabhängige Eigenschaften der PFC-Drossel 211 die Netzspannungsmessung 221 ebenfalls verfälscht wird, da bauteilspezifische Effekte im generatorischen Betrieb zum Tragen kommen.

Die Netzspannungsmessung 221 wird bei einem generatorischen Betrieb des Motors (z.B. Motor-Bremsvorgang) verfälscht. Die Zwischenkreisspannung am Kondensator 231 ist größer als die Netzspannung und die an der PFC-Drossel 211 abfallende Spannung wird fast null, womit der Messzweig 220 den Messwert der Netzspannung 221 um den Abfall der Spannung UL an der PFC-Drossel 211 verfälscht.

Dadurch kann im generatorischen Betrieb eine gute Zwischenkreisspannungs-Stabilisierung bzw. ein gutes Regelverhalten nicht von Softwarelösungen gewährleistet werden, weil die regelungstechnischen Verfahren eine genaue Netzspannungsmessung fordern, um ein gutes Regelverhalten und genaue Schutzfunktionen zu gewährleisten.

Eine Zwischenkreisspannungsstabilisierung zur Vermeidung einer Überspannung und einem möglichen Schaden an der Elektronik kann durch eine verfälschte Netzspannungsmessung nicht gewährleistet werden, da die Netzspannung zur Plausibilisierung erforderlich ist.

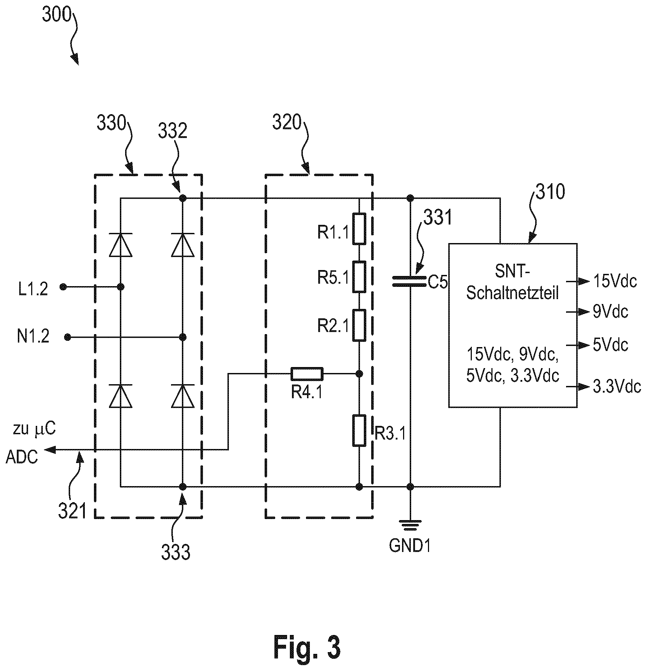

Aus diesen Gründen wird die Netzeingangsspannungsmessung nicht auf Basis des Zwischenkreiskondensators 231 des Leistungsteils (motorseitig) durchgeführt, wie in Figur 2 dargestellt, sondern auf Basis des Zwischenkreiskondensators 321 des Schaltnetzteiles 310 (steuerseitig), welches die Betriebskleinspannungen bereitstellt, wie in Figur 3 dargestellt. Falls kein SNT Zwischenkreis vorgesehen ist, kann eine unabhängige Gleichrichterbrücke mit einer Kleinlast und Messbeschaltung an dieser Gleichrichterbrücke vorgesehen werden. Somit entgeht man den Koppeleffekten des generatorischen Betriebes des Motors im Leistungsteil.

Fig. 3 zeigt einen Schaltplan einer Umrichter-Elektronik 300 eines Permanentmagneterregten Mehrphasen Elektromotors mit Netzspannungsmessung am DC-Zwischenspannungsschaltkreis des Schaltnetzteils gemäß einer beispielhaften Ausführungsform.

Die Umrichter-Elektronik 300 umfasst eine Gleichrichterbrücke 330 in Form einer B2-Schaltung mit Glättungskondensator 331 und einen Widerstandsteiler 320 zum Messen der Netzspannung 321 sowie ein Schaltnetzteil 310, das die Kleinspannungen von z.B. 15Vdc, 9Vdc, 5Vdc und 3.3Vdc erzeugen kann. Die Gleichrichterbrücke 330 ist an die beiden oben zu Figur 2 beschriebenen Ausgänge L1.2 und N1.2 angeschlossen. Zwischen einem oberen Abgriff 332 und einem unteren Abgriff 333 der Gleichrichterbrücke 330 ist der Widerstandsteiler 320 und auch das Schaltnetzteil 310 geschaltet. Der Widerstandsteiler umfasst eine Serienschaltung mit den Widerständen R1.1, R5.1, R2.1, R3.1, wobei ein Abgriff zwischen R2.1 und R3.1 realisiert ist, über den via R4.1 ein Messwert der Netzspannung 321 bestimmt werden kann. Der Messwert 321 wird zu einem Microcontroller ADC geführt, um für eine geeignete Regelung der Umrichter zu sorgen.

Die Netzeingangsspannungsmessung 321 wird hier nicht auf Basis des Zwischenkreiskondensators 231 des Leistungsteils (motorseitig) durchgeführt, wie oben zu Figur 2 beschrieben, sondern auf Basis des Zwischenkreiskondensators 331 des Schaltnetzteiles 310 (steuerseitig), welches die Betriebskleinspannungen bereitstellt. D.h. die Netzspannungsmessung wird über der SNT-Schaltnetzteilzwischenkreis-spannung gemessen. Da diese von dem Motorsteuerkreis voll entkoppelt ist, wird hier die richtige Netzspannung mit der doppelten Netzfrequenz gemessen. Somit kann die Regelung die Motorzwischenkreisspannung richtig regeln.

Falls kein SNT Zwischenkreis vorgesehen ist, kann eine unabhängige Gleichrichterbrücke mit einer Kleinlast und Messbeschaltung an dieser Gleichrichterbrücke vorgesehen werden. Somit entgeht man den Koppeleffekten des generatorischen Betriebes des Motors im Leistungsteil.

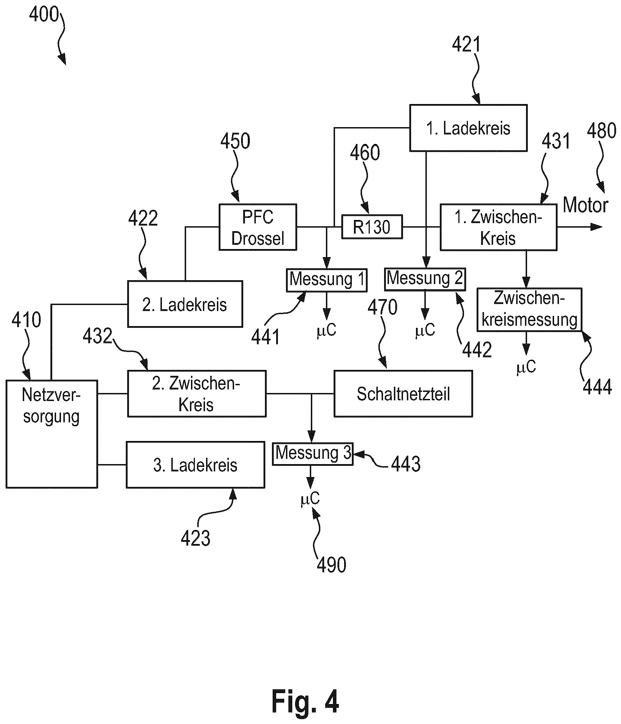

Fig. 4 zeigt ein Blockschaltbild einer Umrichter-Elektronik 400 eines Permanentmagneterregten Mehrphasen Elektromotors mit verschiedenen Messpunkten zur Messung der Netzspannung gemäß einer beispielhaften Ausführungsform.

Die Umrichter-Elektronik 400 hat zwei unabhängige DC-Zwischenkreisspannungskreise 431, 432. Es wird eine DC-Zwischenkreisspannung zur Motoransteuerung (mit entsprechender Leistung), welche im ersten DC-Zwischenkreisspannungskreis erzeugt wird, verwendet. Es wird eine zweite DC-Zwischenkreisspannung mit geringer Leistung, welche im zweiten DC-Zwischenkreisspannungskreis 432 erzeugt wird, zur Bereitstellung der Betriebskleinspannungen durch ein Schaltnetzteil 470 verwendet. Die Netzspannungsmessung wird aus der Messbeschaltung 443, die an dem Zwischenkreis 432 des Schaltnetzteiles 470 angeschlossen ist, generiert. Die Umrichter-Elektronik 400 hat eine Netzversorgungsschaltung 410 mit DC-Spannungsverdoppler, der Netzspannungen von 120VAC ebenfalls gewährleistet (Gleichbrückenschaltungstopologie für Schaltnetzteile 120VAC). Zur Kontrolle des ordnungsgemäßen Schaltens wird das Umschalten dieses Ladekreises über die Spannungsmessdifferenz zwischen Messpunkt Netzspannungsmessung (1) 441 und Netzspannungsmessung (2) 442 sichergestellt (Relaiskontakt). Die Zwischenkreisspannung wird direkt gemessen. Die Netzspannung wird über die Netzspannungsmessung (3) 443 direkt ohne Einfluss des Motors 480 gemessen (für Motor- und Generatorbetrieb). Die Kontrollsignalspannungen werden über analoge A/D Eingänge des Mikrocontrollers oder über eine Auswerteelektronik erfasst.

D.h., die Umrichter-Elektronik 400 umfasst eine Netzversorgungsschaltung 410, z.B. entsprechend der oben zu Figur 2 beschriebenen Netzversorgungsschaltung 210. Die Umrichter-Elektronik 400 umfasst eine PFC-Drossel 450 mit nachgeschaltetem Widerstand 460. Die PFC-Drossel kann z.B. der oben zu Figur 2 beschriebenen PFC-Drossel 211 entsprechen. Die Umrichter-Elektronik 400 umfasst einen ersten DC-Zwischenspannungskreis 431 (abgekürzt erster Zwischenkreis), z.B. entsprechend dem oben zu Figur 2 beschriebenen Zwischenspannungskreis 230, 231. Die Umrichter-Elektronik 400 umfasst einen zweiten DC-Zwischenspannungskreis 432 (abgekürzt zweiter Zwischenkreis), z.B. entsprechend dem oben zu Figur 3 beschriebenen Zwischenspannungskreis 330, 331. Die Umrichter-Elektronik 400 umfasst drei Ladekreise 421, 422, 423 zum Laden der drei Phasen des Elektromotors mit Strom der entsprechenden Phase, z.B. entsprechend den Phasenströmen 121, wie in Figur 1 beschrieben. Die Umrichter-Elektronik 400 umfasst ferner ein Schaltnetzteil 470, z.B. entsprechend dem oben zu Figur 3 beschriebenen Schaltnetzteil 310. Die Umrichter-Elektronik 400 umfasst ferner vier Messschaltungen 441, 442, 443, 444 zum Messen der Netzspannung an verschiedenen Punkten der Schaltung einen ersten DC-Zwischenspannungskreis 431, z.B. entsprechend dem oben zu Figur 2 beschriebenen Zwischenspannungskreis 230, 231.

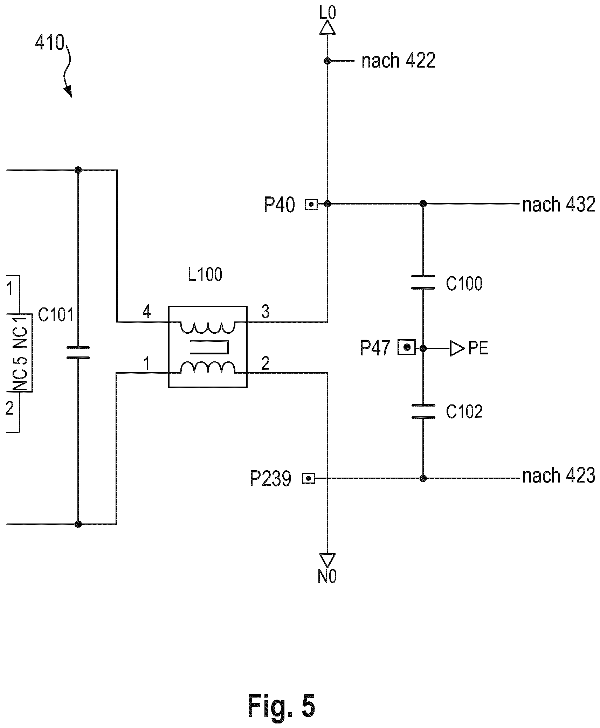

Der dritte Ladekreis 423 ist an die Netzversorgungsschaltung 410 gekoppelt, z.B. gemäß der Darstellung in den folgenden Figuren 5 bis 13. Der zweite Zwischenkreis 432 ist zwischen die Netzversorgungsschaltung 410 und das Schaltnetzteil 470 gekoppelt, z.B. gemäß der Darstellung in den folgenden Figuren 5 bis 13. Der zweite Ladekreis 422 ist zwischen die Netzversorgungsschaltung 410 und die PFC-Drossel 450 geschaltet, z.B. gemäß der Darstellung in den folgenden Figuren 5 bis 13. Der erste Zwischenkreis 432 ist zwischen den Widerstand 460 und den Motor 480 geschaltet, z.B. gemäß der Darstellung in den folgenden Figuren 5 bis 13. Der erste Ladekreis 421 ist an die PFC-Drossel 450 und den Widerstand 460 geschaltet, z.B. gemäß der Darstellung in den folgenden Figuren 5 bis 13.

Eine erste Messschaltung 441 misst die Netzspannung zwischen PFC-Drossel 450 und Widerstand 460. Eine zweite Messschaltung 442 misst die Netzspannung zwischen Widerstand 460 und 1. Zwischenkreis 431. Eine dritte Messschaltung 443 misst die Netzspannung zwischen dem 2. Zwischenkreis 432 und Schaltnetzteil 470, wie oben zu Figur 3 beschrieben. Eine vierte Messschaltung 444 misst die Netzspannung am 1. Zwischenkreis 431, wie z.B. oben zu Figur 2 beschrieben.

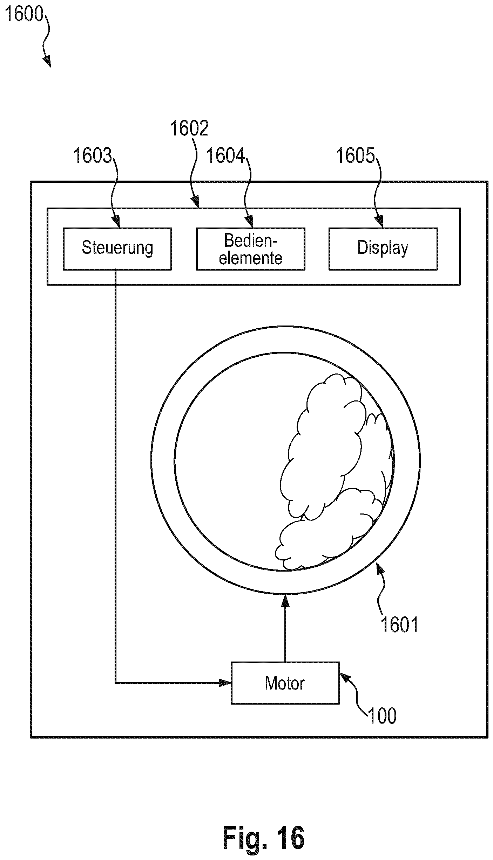

Die Umrichter-Elektronik 400 kann in einem Wäschepflegegerät eingesetzt werden, z.B. ein Wäschepflegegerät 1600 wie unten zu Figur 16 beschrieben. Solch ein Wäschepflegegerät 1600 umfasst einen Gleichstrommotor 480, z.B. einen Gleichstrommotor 100 mit Beschaltung wie zu Figur 1 beschrieben mit Umrichter-Elektronik 400.

Die Umrichter-Elektronik 400 umfasst die folgenden Schaltkreise: einen Netzversorgungsschaltkreis 410 zum Versorgen des Wäschepflegegeräts mit einer Netzspannung, z.B. einen Netzversorgungsschaltkreis 410 wie zu Figur 2 beschrieben; einen ersten Gleichstrom-Zwischenspannungsschaltkreis 431, der ausgebildet ist, die Netzspannung in eine erste Zwischenkreisspannung zur Versorgung einer Leistungsstufe (z.B. einer Leistungsstufe 120 wie zu Figur 1 beschrieben) zur Phasensteuerung des Gleichstrommotors 480, 130 gleichzurichten; einen zweiten Gleichstrom-Zwischenspannungsschaltkreis 432, der ausgebildet ist, die Netzspannung in eine zweite Zwischenkreisspannung zur Versorgung eines Schaltnetzteils 470 (z.B. eines Schaltnetzteils 310 wie oben zu Figur 3 beschrieben) zum Bereitstellen von Betriebsspannungen für eine Steuerungslogik 110 zum Ansteuern der Leistungsstufe 120 gleichzurichten. Die Umrichter-Elektronik 400 weist einen Spannungsregler auf, z.B. in Form eines Mikrocontrollers 490, der ausgebildet ist, den ersten Gleichstrom-Zwischenspannungsschaltkreis 431 basierend auf einem Messwert der Netzspannung 443 zu regeln und den Messwert der Netzspannung 443 auf Basis des zweiten Gleichstrom-Zwischenspannungsschaltkreises 432 zu bestimmen.

Insbesondere kann der Gleichstrommotor 480 ein Permanent-Magnet erregter Mehrphasenmotor sein, wie z.B. ein Permanent-Magnet erregter Synchronmotor, PMSM, oder ein bürstenloser Gleichstrommotor, BLDC. Die Umrichter-Elektronik 400 kann eine Inverter-Elektronik für den Permanent-Magnet erregten Mehrphasenmotor umfassen.

Der Spannungsregler bzw. Mikrocontroller 490 ist ausgebildet, den Messwert der Netzspannung 443 sowohl im motorischen Betrieb als auch im generatorischen Betrieb des Gleichstrommotors 480 zu bestimmen. Insbesondere im generatorischen Betrieb des Motors kann durch den Messwert der Netzspannung 443 am zweiten Gleichstrom-Zwischenspannungsschaltkreis 432 die Zwischenkreisspannung (am ersten Gleichstrom-Zwischenspannungsschaltkreis 431) besser stabilisiert werden.

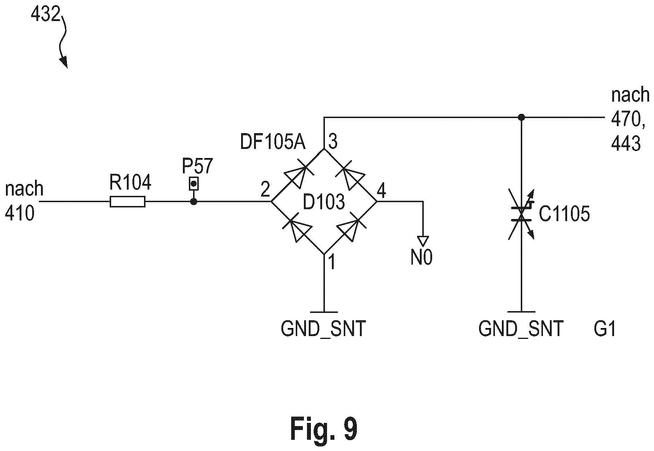

Der zweite Gleichstrom-Zwischenspannungsschaltkreis 432 umfasst einen Zwischenkreiskondensator 331, z.B. wie in Figur 3 dargestellt, zur Glättung der zweiten Zwischenkreisspannung umfasst. Ein solcher Zwischenkreiskondensator C1105 ist auch in Figur 9 näher dargestellt.

Der Spannungsregler bzw. Mikrocontroller 490 ist ausgebildet ist, den ersten Gleichstrom-Zwischenspannungsschaltkreis 431 basierend auf einem Spannungsabfall an dem Zwischenkreiskondensator 331 des zweiten Gleichstrom-Zwischenspannungsschaltkreises 432 zu regeln, wie z.B. in Figur 3 dargestellt. Der Spannungsabfall kann z.B. mit der dritten Messschaltung gemessen und der Messwert über einen A/D-Wandler digitalisiert und dem Mikrocontroller 490 zur Verfügung gestellt werden.

Die Umrichter-Elektronik 400 umfasst einen Widerstandsteiler, z.B. einen Widerstandsteiler 320 wie in Figur 3 dargestellt, der ausgebildet ist, einen Spannungsabfall an dem Zwischenkreiskondensator 331 des zweiten Gleichstrom-Zwischenspannungsschaltkreises 432 zu bestimmen.

Der zweite Gleichstrom-Zwischenspannungsschaltkreis 432 ist von dem ersten Gleichstrom-Zwischenspannungsschaltkreis 431 elektrisch entkoppelt.

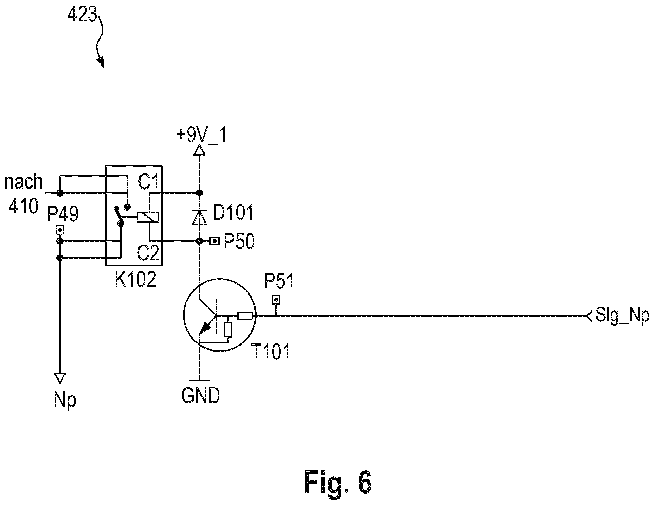

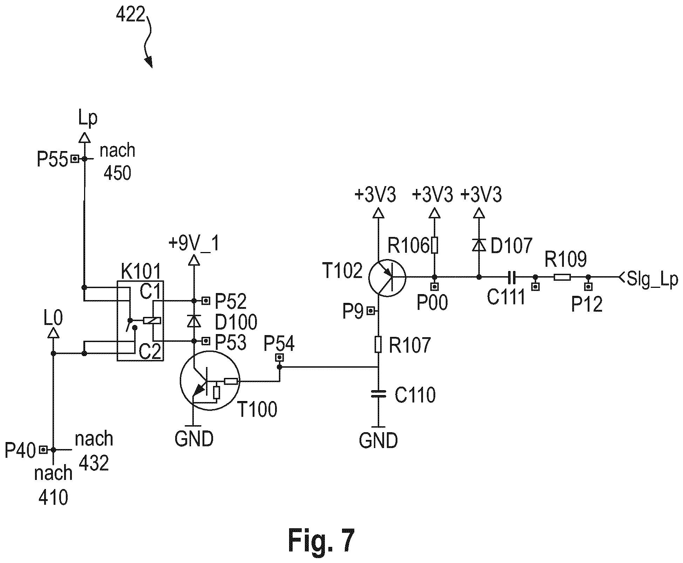

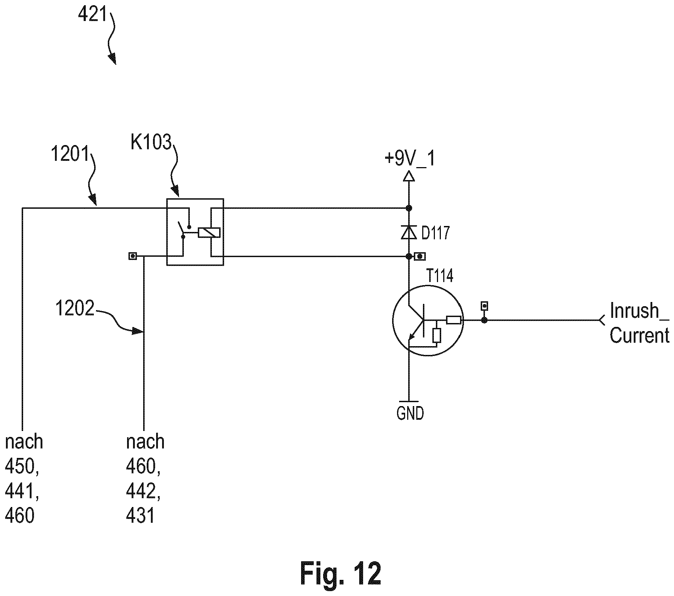

In einer Ausführungsform umfasst die Umrichter-Elektronik 400 einen ersten Ladekreis 421 zum Laden einer ersten Phase des Gleichstrommotors 480. Die Umrichter-Elektronik 400 verfügt über ein Relais, z.B. das in Figur 12 dargestellte Relais K103 zur Steuerung eines Umschaltens des ersten Ladekreises 421. Die Umrichter-Elektronik 400 ist ausgebildet, das Umschalten des ersten Ladekreises 421 basierend auf einer Spannungsdifferenz am Relais K103 zu überwachen. Ferner umfasst die Umrichter-Elektronik 400 einen zweiten 422 und einen dritten 423 Ladekreis zum Laden einer zweiten und dritten Phase des Gleichstrommotors 480. Zur Steuerung des Umschaltens der zweiten und dritten Ladekreise werden entsprechende Relais verwendet, wie in den Figuren 6 und 7 näher dargestellt. Die Umrichter-Elektronik 400 ist ausgebildet, das Umschalten des zweiten und dritten Ladekreises 422, 423 basierend auf einer Spannungsdifferenz an den entsprechenden Relais K101 und K102 der zweiten und dritten Ladekreise 422, 423 zu überwachen.

Wie bereits erwähnt umfasst die Umrichter-Elektronik 400 einen Mikrocontroller 490, der ausgebildet ist, die Spannungsdifferenz am Relais K103 (und an den beiden anderen Relais K101 und K102) zu bestimmen und auszuwerten.

Der erste Kontakt 1201 des Relais K103 ist über eine PFC-Drossel 450 mit dem Netzversorgungsschaltkreis 410 gekoppelt ist. Ein zweiter Kontakt 1202 des Relais K103 ist mit dem ersten Gleichstrom-Zwischenspannungsschaltkreis 431 gekoppelt.

Die Umrichter-Elektronik 400 umfasst einen ersten Messschaltkreis 441 zur Netzspannungsmessung am ersten Kontakt 1201 des Relais K103 und einen zweiten Messschaltkreis 442 zur Netzspannungsmessung am zweiten Kontakt 1202 des Relais K103. Die Umrichter-Elektronik 400 ist ausgebildet, das Umschalten des ersten Ladekreises 421 basierend auf einer Differenz der mit beiden Messschaltkreisen 441, 442 gemessenen Netzspannungen zu überwachen.

Die Umrichter-Elektronik 400 umfasst einen dritten Messschaltkreis 443 zur Netzspannungsmessung am zweiten Gleichstrom-Zwischenspannungsschaltkreis 432. Die Umrichter-Elektronik 400 ist ausgebildet, das Umschalten des ersten Ladekreises 421 ferner basierend auf der mit dem dritten Messschaltkreis 443 gemessenen Netzspannung, d.h. der am Schaltnetzteil gemessenen Netzspannung, zu überwachen.

Die Umrichter-Elektronik 400 kann einen vierten Messschaltkreis 444 zur Netzspannungsmessung am ersten Gleichstrom-Zwischenspannungsschaltkreis 431 umfassen. Die Umrichter-Elektronik 400 ist ausgebildet, die mit dem vierten Messschaltkreis 444 gemessene Netzspannung basierend auf der mit dem dritten Messschaltkreis 443 gemessenen Netzspannung zu stabilisieren. Die Stabilisierung bzw. Regelung der Netzspannung kann im Mikrocontroller 490 erfolgen.

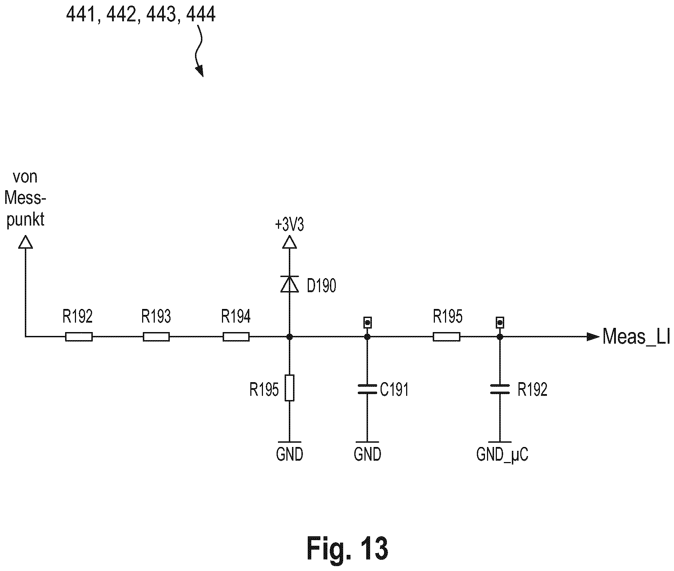

In einer Ausführungsform umfassen die vier Messschaltkreise 441, 442, 443, 444 jeweils einen Widerstandsteiler, z.B. einen Widerstandsteiler 220, 320 wie in den Figuren 2 und 3 dargestellt, zur Bestimmung eines jeweiligen Messwertes der Netzspannung. Figur 13 zeigt eine mögliche Schaltungsrealisierung eines solchen Messschaltkreises.

Beispielhafte Schaltungsrealisierungen der in Figur 4 dargestellten Schaltkreise werden in den folgenden Figuren 5 bis 13 näher erläutert.

Fig. 5 zeigt einen Schaltplan eines Netzversorgungsschaltkreises 410 in der Umrichter-Elektronik 400 aus Fig. 4 gemäß einer beispielhaften Ausführungsform.

Der Netzversorgungsschaltkreis 410 umfasst drei Leitungen, einen L0-Leiter bzw. stromführenden Leiter, einen NO-Leiter bzw. Neutralleiter und einen PE-Leiter zur Erdung. Der L0-Leiter ist über eine erste Spule eines Transformators geführt. Der NO-Leiter ist über eine zweite Spule des Transformators geführt. Der PE-Leiter wird zwischen einem ersten Kondensator C100 und einem zweiten Kondensator C102 einer an den Ausgang des Transformators geschalteten Reihenschaltung der beiden Kondensatoren C100 und C102 abgegriffen.

Fig. 6 zeigt einen Schaltplan eines dritten Ladekreises 423 in der Umrichter-Elektronik 400 aus Fig. 4 gemäß einer beispielhaften Ausführungsform.

Der dritte Ladekreis 423 umfasst ein Relais K102, das an den NO-Leiter des in Figur 5 dargestellten Netzversorgungsschaltkreises 410 geschaltet ist, und einen Transistor T101, z.B. einen Bipolar-Transistor zum Schalten des dritten Phasenstromes auf den Motor. Das Relais K102 kann z.B. als monostabile Kippstufe realisiert sein.

Fig. 7 zeigt einen Schaltplan eines zweiten Ladekreises 422 in der Umrichter-Elektronik 400 aus Fig. 4 gemäß einer beispielhaften Ausführungsform.

Der zweite Ladekreis 422 umfasst ein Relais K101, das an den L0-Leiter des in Figur 5 dargestellten Netzversorgungsschaltkreises 410 geschaltet ist, und einen Transistor T100, z.B. einen Bipolar-Transistor zum Schalten des zweiten Phasenstromes auf den Motor. Das Relais K101 kann z.B. als monostabile Kippstufe realisiert sein. Im Schaltpfad ist ein weiterer Transistor T102, z.B. ein Feldeffekttransistor, realisiert, der das Ein- und Ausschalten des Transistors T100 steuert.

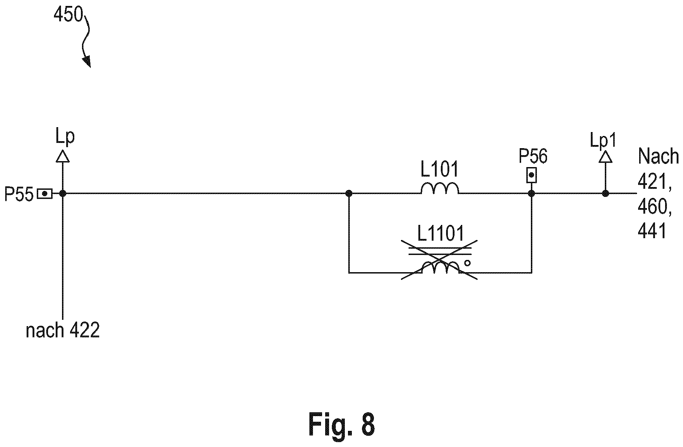

Fig. 8 zeigt einen Schaltplan einer PFC-Drossel 450 in der Umrichter-Elektronik 400 aus Fig. 4 gemäß einer beispielhaften Ausführungsform.

Der Eingang der PFC ("Power Factor Correction")-Drossel ist an den oben beschriebenen Schaltkreis 422 geschaltet. Der Ausgang der PFC-Drossel ist an die oben beschriebenen Schaltkreise 421, 460, 441 geschaltet.

Drosseln wie die PFC-Drossel 450 sind Spulen bzw. Induktivitäten zur Begrenzung von Strömen in elektrischen Leitungen, zur Zwischenspeicherung von Energie in Form ihres Magnetfeldes, zur Impedanzanpassung oder zur Filterung. Die PFC-Drossel 450 ist in Serie zu den anderen Bauteilen der Umrichter-Elektronik 400 geschaltet. Die PFC-Drossel 450 arbeitet in Reihe zur speisenden Netzspannung im Schaltnetzteil, um die Oberwellenbelastung des speisenden Netzes zu verringern.

Fig. 9 zeigt einen Schaltplan eines zweiten Zwischenkreises 432 in der Umrichter-Elektronik 400 aus Fig. 4 gemäß einer beispielhaften Ausführungsform. Der zweite Zwischenkreis 432 bzw. zweite Gleichstrom-Zwischenspannungsschaltkreis umfasst einen Gleichrichter D103, der als B2-Schaltung mit vier Dioden realisiert ist, und einen Glättungskondensator C1105, der an die zwei Kontakte 1 und 3 der Brückenschaltung D103 geschaltet ist. Der zweite Zwischenkreis 432 ist eingangsseitig (über einen Widerstand R104 an die Spannungsversorgung 410 geschaltet und stellt ausgangsseitig die Betriebskleinspannungen für das Schaltnetzteil 470 bereit. Der zweite Zwischenkreis 432 kann gemäß der Schaltung 300 in Figur 3 realisiert sein.

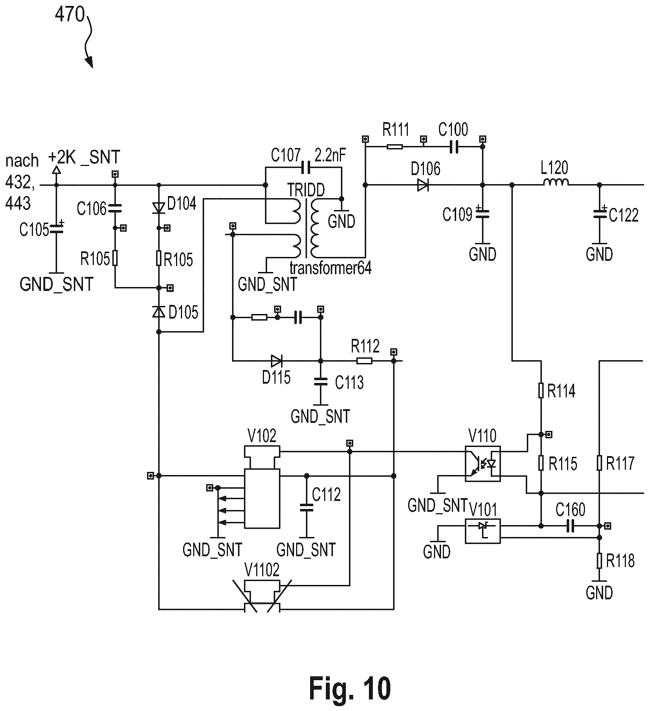

Fig. 10 zeigt einen Schaltplan eines Schaltnetzteils 470 in der Umrichter-Elektronik 400 aus Fig. 4 gemäß einer beispielhaften Ausführungsform.

Das Schaltnetzteil (SNT) ist eine elektronische Baugruppe, die eine unstabilisierte Eingangsspannung in eine konstante Ausgangsspannung umwandelt. Folgende Vorgänge finden im Schaltnetzteil statt: Gleichrichtung der Netzwechselspannung, Glättung der entstehenden Gleichspannung, "Zerhacken" der Gleichspannung, Transformierung der entstandenen Wechselspannung, Gleichrichtung der Wechselspannung, und Siebung der Gleichspannung. Mit Hilfe der Regelschaltung wird erreicht, dass so viel Energie in das Schaltnetzgerät hineinfließt, wie an den Verbraucher weitergegeben werden soll. Die dafür erforderliche Regelung erfolgt über eine Pulsdauer oder eine Pulsphasensteuerung.

Das Schaltnetzteil 470 verfügt über einen Ferritkerntransformator TR100, um Spannungstransformation und galvanische Trennung von Ausgangs- und Eingangsseite zu erreichen. Um auch die Regelschleife galvanisch vom Netz zu trennen, verfügt das Schaltnetzteil 470 über einen Optokoppler V110, um die Übertragung der Schaltsignale an die Leistungstransistoren zu realisieren. In Figur 10 wird die Trennung durch einen Trafo TR100 und einen Optokoppler V110 im Regel- und Steuerkreis erreicht.

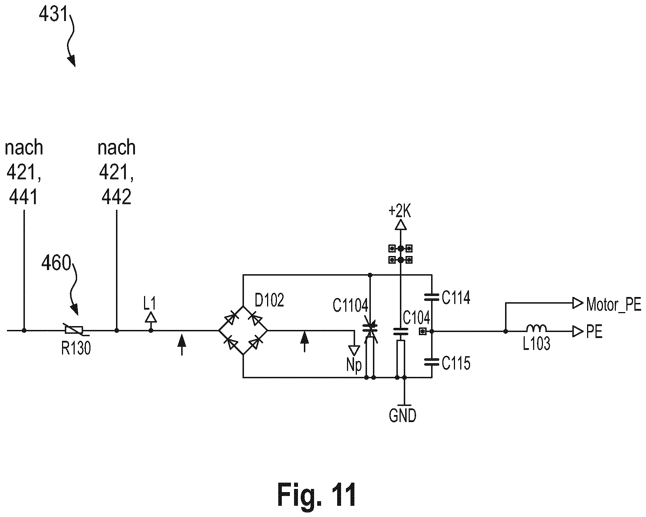

Fig. 11 zeigt einen Schaltplan eines ersten Zwischenkreises 431 in der Umrichter-Elektronik 400 aus Fig. 4 gemäß einer beispielhaften Ausführungsform.

Der erste Zwischenkreis 431 bzw. erste Gleichstrom-Zwischenspannungsschaltkreis umfasst einen Gleichrichter D302, der als B2-Schaltung mit vier Dioden realisiert ist, und einen Glättungskondensator C1104, der an die zwei Kontakte 1 und 4 der Brückenschaltung D302 geschaltet ist. Der erste Zwischenkreis 431 ist eingangsseitig über einen Widerstand R130 an die Schaltkreise 421, 441 und direkt, d.h. ohne den Widerstand R130 an die Schaltkreise 421 und 442 angeschlossen. Ausgangsseitig ist der erste Zwischenkreis 431 über einen Mittenabgriff an einer Serienschaltung aus zwei Kondensatoren C114, C115 an den Schutzkontakt PE angeschlossen. Der erste Zwischenkreis 431 stellt ausgangsseitig die Betriebsspannungen für Phasen des Motors bereit. Der erste Zwischenkreis 431 kann z.B. gemäß der Schaltung 200 in Figur 2 realisiert sein.

Fig. 12 zeigt einen Schaltplan eines ersten Ladekreises 421 in der Umrichter-Elektronik 400 aus Fig. 4 gemäß einer beispielhaften Ausführungsform.

Der erste Ladekreis 421 umfasst ein Relais K103 mit einem ersten Kontakt 1201, der an die oben beschriebenen Schaltkreise 450, 441, 460 geschaltet ist, und einem zweiten Kontakt 1202, der an die oben beschriebenen Schaltkreise 460, 442, 431 geschaltet ist. Der Ausgang des Relais K103 ist mit einer Diode D117 beschaltet. Der erste Ladekreis 421 umfasst ferner einen Transistor T114, z.B. einen Bipolar-Transistor zum Schalten des ersten Phasenstromes auf den Motor. Das Relais K103 kann z.B. als monostabile Kippstufe realisiert sein.

Fig. 13 zeigt einen Schaltplan eines Messschaltkreises 441, 442, 443, 444 zur Messung der Netzspannung an unterschiedlichen Messpunkten in der Umrichter-Elektronik 400 aus Fig. 4 gemäß einer beispielhaften Ausführungsform.

Der Messschaltkreis umfasst einen Widerstandsteiler aus den in Reihe geschalteten Widerständen R192, R193, R194 und R196 und einem Abgriff zwischen R194 und R196, an dem ein Potential von 3.3V über den Widerstand R195 nach Masse abfließt. Der Abgriff ist über eine Diode D190 gegen Verpolung geschützt. Ein Kondensator C191 ist parallel zu dem Widerstand 195 nach Masse geschaltet. Eine zweiter Kondensator C192 ist am Messausgang Meas_LI nach Masse geschaltet.

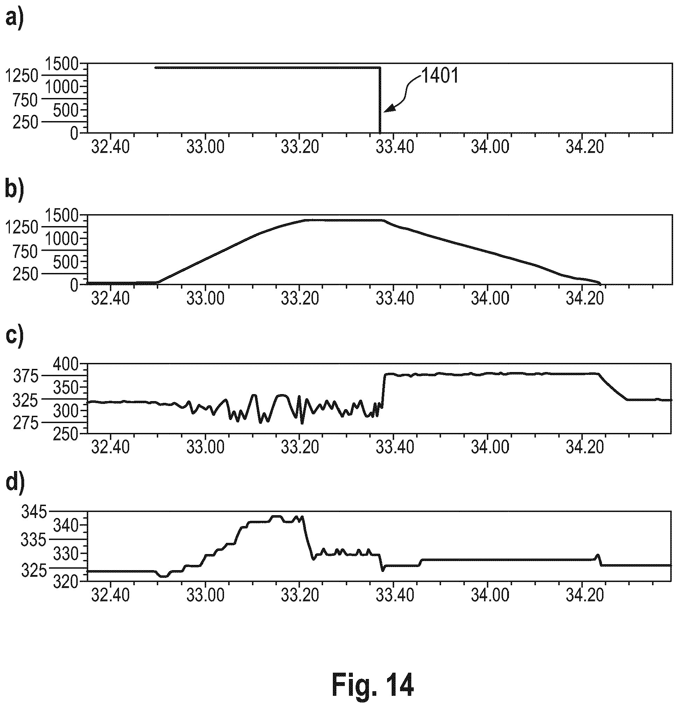

Fig. 14 a)-d) zeigen vier Diagramme, welche die Verfälschung der Netzspannungsmessung in Abhängigkeit der Motorlast bei Nutzung bekannter Messschaltungen zur Netzspannungsmessung aufzeigen.

Figur 14a) zeigt die Motordrehzahl eines Elektromotors 100, z.B. gemäß Figur 1, bei dem keine Messung der Netzspannung am DC-Zwischenspannungsschaltkreis des Schaltnetzteils realisiert ist, sondern die Messung der Netzspannung am DC-Zwischenspannungsschaltkreis des Leistungsteils erfolgt.

Nach einer bestimmten Zeit 1401 von etwa 33:38 Minuten erfolgt eine Abschaltung des Motors, in Figur 14a) ist der Abschaltbefehl dargestellt. Während zuvor eine Drehzahl von etwa 1400 Umdrehungen pro Minute angewiesen war, wird die Drehzahl zum Zeitpunkt 1401 abrupt auf Null gesetzt. Figur 14b) zeigt die tatsächliche Motordrehzahl. Diese erhöht sich bis zum Zeitpunkt 1401 auf 1400 Umdrehungen pro Minute und fällt danach langsam ab bis auf Null. Figur 14c) zeigt die gemessene Zwischenkreisspannung am motorseitigen Zwischenspannungsschaltkreis. Sie schwankt stark zwischen den Werten 275 V bis 375 V. Nach dem Abschaltbefehl zum Zeitpunkt 1401 steigt sie sogar an bis auf 375 V und fällt erst nach langer Zeit, bei etwa 34:25 Minuten wieder etwas ab. Figur 14d) zeigt die gemessene Netzspannung am motorseitigen Zwischenspannungsschaltkreis. Auch die gemessene Netzspannung schwankt stark zwischen den Werten 320V bis 345V. Nach dem Abschaltbefehl zum Zeitpunkt 1401 schwankt sie zwischen den Werten 325V und 330V.

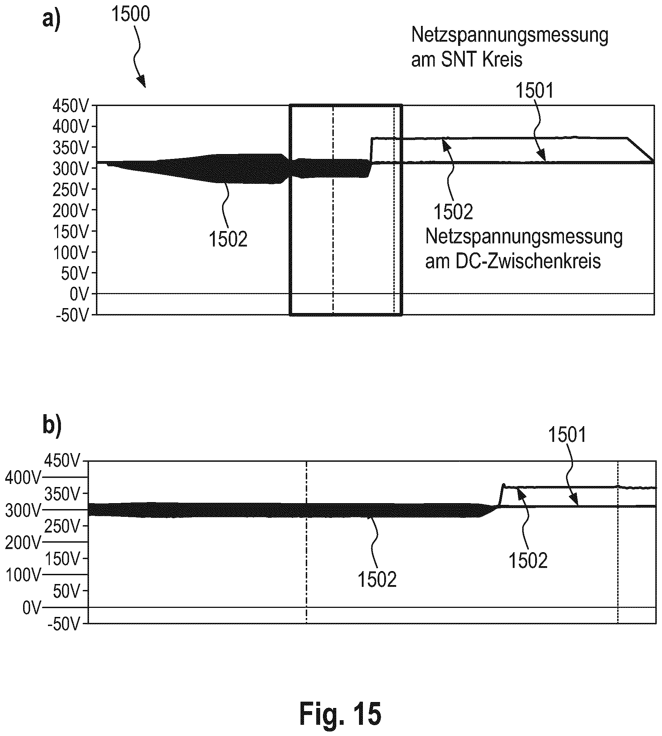

Fig. 15 a),b) zeigen zwei Diagramme, welche die Unterschiede einer Netzspannungsmessung am DC-Zwischenkreis des Leistungsteils mit bekannten Messschaltungen gegenüber einer Netzspannungsmessung am DC-Zwischenkreis des Schaltnetzteils gemäß Ausführungsformen der Erfindung verdeutlichen.

Die Kurve 1502 zeigt die Netzspannungsmessung am motorseitigen DC-Zwischenspannungsschaltkreis, z.B. gemäß Figur 2, während die Kurve 1501 die Netzspannungsmessung am SNT-seitigen DC-Zwischenspannungsschaltkreis, z.B. gemäß Figur 3 darstellt. Figur 15b) stellt einen vergrößerten Ausschnitt von Figur 15a) dar. Während die Kurve 1502 stark schwankt und insbesondere nach dem Abschalten des Motors entsprechend 1401 aus Figur 14a) einen hohen Spannungswert von etwa 345V annimmt, kommt es bei der Kurve 1501 zu keinen Schwankungen, sie bleibt konstant auf einem Spannungswert von etwa 325V.

Fig. 16 zeigt eine schematische Darstellung eines Wäschepflegegeräts 1600 mit einem Elektromotor 100, wie oben zu Figur 1 beschrieben, gemäß einer beispielhaften Ausführungsform.

Unter einem Wäschepflegegerät 1600 wird ein Gerät verstanden, welches zur Wäschepflege eingesetzt wird, wie z.B. eine Waschmaschine oder ein Wäschetrockner. Insbesondere wird unter solch einem Wäschepflegegerät ein Haushaltswäschepflegegerät verstanden, also ein Wäschepflegegerät, welches im Rahmen der Haushaltsführung verwendet wird, und mit dem Wäsche in haushaltsüblichen Mengen behandelt wird.

Das Wäschepflegegerät 1600 umfasst einen Elektromotor zum Antreiben einer Trommel 1601 des Wäschepflegegeräts 1600, z.B. einen Elektromotor 100 entsprechend der Darstellung in Fig. 1. Das Wäschepflegegerät 1600 kann ferner eine Steuerung 1603 umfassen, welche dazu dient, den Motor 100 zu steuern oder sogar zu regeln, beispielsweise gemäß einem eingestellten Wäschepflegeprogramm. Ferner können neben der Steuerung 1603 Bedienelemente 1604 zur Bedienung des Wäschepflegegeräts 1600, meist über die Steuerung 1603 sowie ein Display 1605 zur Anzeige des Betriebszustands des Wäschepflegegeräts 1600 vorhanden sein. Steuerung 1603, Bedienelemente 1604 und Display 1605 können z.B. in (oder hinter) einem Armaturenbrett bzw. einer Bedienblende 1602 des Wäschepflegegeräts 1600 angeordnet sein.

Der Motor 100 kann eine Umrichter-Elektronik 400 gemäß oben zu den Figuren 2 bis 13 beschriebenen Ausführungsformen umfassen. Dies Umrichter-Elektronik 400 kann Folgendes umfassen: einen Netzversorgungsschaltkreis 410, 210 zum Versorgen des Wäschepflegegeräts mit einer Netzspannung; einen ersten Gleichstrom-Zwischenspannungsschaltkreis 431, der ausgebildet ist, die Netzspannung in eine erste Zwischenkreisspannung zur Versorgung einer Leistungsstufe 120 zur Phasensteuerung des Gleichstrommotors 480, 130 gleichzurichten; einen zweiten Gleichstrom-Zwischenspannungsschaltkreis 432, der ausgebildet ist, die Netzspannung in eine zweite Zwischenkreisspannung zur Versorgung eines Schaltnetzteils 470, 310 zum Bereitstellen von Betriebsspannungen für eine Steuerungslogik (110) zum Ansteuern der Leistungsstufe (120) gleichzurichten. Die Umrichter-Elektronik 400 weist einen Spannungsregler 490 auf, der ausgebildet ist, den ersten Gleichstrom-Zwischenspannungsschaltkreis 431 basierend auf einem Messwert der Netzspannung 443 zu regeln und den Messwert der Netzspannung 443 auf Basis des zweiten Gleichstrom-Zwischenspannungsschaltkreises 432 zu bestimmen.

Damit wird die eingangsseitig beschriebene Aufgabe der Erfindung gelöst.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Elektromotor mit Beschaltung
- 110: Steuerungslogik
- 111: Steuersignale
- 120: Leistungsstufe
- 121: motorseitige Phasensignale
- 122: Netzteil
- 123: Netzspannung
- 130: Elektromotoreinheit
- 131: Stator mit Permanentmagnet
- 132: Rotor
- 133: Lagesensoren bzw. Hallsensoren
- 134: Rotorlagesignale

- 200: Umrichter-Elektronik
- 210: Netzversorgungsschaltung
- 211: PFC-Drossel
- 220: Widerstandsteiler zum Abgriff der Netzspannung
- 221: Messpunkt am Widerstandsteiler für die Netzspannung
- 230: Brückengleichrichterschaltung mit vier Dioden
- 231: Glättungskondensator an der Brückengleichrichterschaltung

- 300: Umrichter-Elektronik
- 310: Schaltnetzteil
- 320: Widerstandsteiler zum Abgriff der Netzspannung
- 330: Brückengleichrichterschaltung mit vier Dioden
- 331: Glättungskondensator an der Brückengleichrichterschaltung
- 321: Messpunkt am Widerstandsteiler für die Netzspannung

- 400: Umrichter-Elektronik
- 410: Netzversorgungsschaltung
- 421: 1. Ladekreis
- 422: 2. Ladekreis
- 423: 3. Ladekreis
- 431: 1. Zwischenkreis bzw. Gleichstrom-Zwischenspannungskreis
- 432: 2. Zwischenkreis bzw. Gleichstrom-Zwischenspannungskreis
- 450: PFC-Drossel
- 460: Widerstand zum Messen der Netzspannung
- 470: Schaltnetzteil
- 441: 1. Messschaltung zur Messung der Netzspannung
- 442: 2. Messschaltung zur Messung der Netzspannung
- 443: 3. Messschaltung zur Messung der Netzspannung
- 444: 4. Messschaltung zur Zwischenkreismessung
- 480: Motor
- 490: Spannungsregler, z.B. Mikrocontroller
- K103: Relais am 1. Ladekreis
- 1201: erster Kontakt am Relais K103
- 1202: zweiter Kontakt am Relais K103

- 1401: Abschaltzeitpunkt zum Abschalten des Motors

- 1502: Messwert der Netzspannung bei Messung am motorseitigen Gleichstrom-Zwischenspannungskreis
- 1501: Messwert der Netzspannung bei Messung am Gleichstrom-Zwischenspannungskreis des Schaltnetzteils

- 1600: Wäschepflegegerät
- 1601: Trommel
- 1602: Bedienkonsole
- 1603: Steuerung
- 1604: Bedienelemente
- 1605: Display

## Patentansprüche

1. Umrichter-Elektronik (400) für ein Wäschepflegegerät (1600) mit Gleichstrommotor (480), wobei die Umrichter-Elektronik (400) Folgendes umfasst:
einen Netzversorgungsschaltkreis (410, 210) zum Versorgen des Wäschepflegegeräts mit einer Netzspannung;
einen ersten Gleichstrom-Zwischenspannungsschaltkreis (431), der ausgebildet ist, die Netzspannung in eine erste Zwischenkreisspannung zur Versorgung einer Leistungsstufe (120) zur Phasensteuerung des Gleichstrommotors (480, 130) gleichzurichten;
einen zweiten Gleichstrom-Zwischenspannungsschaltkreis (432) eines Schaltnetzteils (470, 310) der Umrichter-Elektronik (400), wobei das Schaltnetzteil (470, 310) Betriebskleinspannungen bereitstellt, wobei der zweite Gleichstrom-Zwischenspannungsschaltkreis (432) ausgebildet ist, die Netzspannung in eine zweite Zwischenkreisspannung zur Versorgung des Schaltnetzteils (470, 310) zum Bereitstellen von Betriebsspannungen für eine Steuerungslogik (110) zum Ansteuern der Leistungsstufe (120) gleichzurichten,
**dadurch gekennzeichnet, dass** der zweite Gleichstrom-Zwischenspannungsschaltkreis (432) einen Zwischenkreiskondensator (331) zur Glättung der zweiten Zwischenkreisspannung umfasst,
wobei die Umrichter-Elektronik (400) einen Spannungsregler (490) aufweist, der ausgebildet ist, den ersten Gleichstrom-Zwischenspannungsschaltkreis (431) basierend auf einem Messwert der Netzspannung (443) zu regeln und den Messwert der Netzspannung (443) auf Basis des Zwischenkreiskondensators (331) des zweiten Gleichstrom-Zwischenspannungsschaltkreises (432) zu bestimmen.

2. Umrichter-Elektronik (400) nach Anspruch 1,
**dadurch gekennzeichnet, dass**
der Gleichstrommotor (480) ein Permanent-Magnet erregter Mehrphasenmotor ist, insbesondere ein Permanent-Magnet erregter Synchronmotor, PMSM, oder ein bürstenloser Gleichstrommotor, BLDC, und wobei die Umrichter-Elektronik (400) eine Inverter-Elektronik für den Permanent-Magnet erregten Mehrphasenmotor umfasst.

3. Umrichter-Elektronik (400) nach Anspruch 1 oder 2,
**dadurch gekennzeichnet, dass**
der Spannungsregler ausgebildet ist, den Messwert der Netzspannung (443) sowohl im motorischen Betrieb als auch im generatorischen Betrieb des Gleichstrommotors (480) zu bestimmen.

4. Umrichter-Elektronik (400) nach einem der vorstehenden Ansprüche,
**dadurch gekennzeichnet, dass**
der Spannungsregler ausgebildet ist, den ersten Gleichstrom-Zwischenspannungsschaltkreis (431) basierend auf einem Spannungsabfall an dem Zwischenkreiskondensator (331) des zweiten Gleichstrom-Zwischenspannungsschaltkreises (432) zu regeln.

5. Umrichter-Elektronik (400) nach einem der vorstehenden Ansprüche,
**dadurch gekennzeichnet, dass**
die Umrichter-Elektronik (400) einen Widerstandsteiler (320) umfasst, der ausgebildet ist, einen Spannungsabfall an dem Zwischenkreiskondensator (331) des zweiten Gleichstrom-Zwischenspannungsschaltkreises (432) zu bestimmen.

6. Umrichter-Elektronik (400) nach einem der vorstehenden Ansprüche,
**dadurch gekennzeichnet, dass**
der zweite Gleichstrom-Zwischenspannungsschaltkreis (432) von dem ersten Gleichstrom-Zwischenspannungsschaltkreis (431) elektrisch entkoppelt ist.

7. Umrichter-Elektronik (400) nach einem der vorstehenden Ansprüche,
**dadurch gekennzeichnet, dass**
die Umrichter-Elektronik (400) einen ersten Ladekreis (421) zum Laden einer ersten Phase des Gleichstrommotors (480), einen zweiten Ladekreis (422) zum Laden einer zweiten Phase des Gleichstrommotors (480) und einen dritten Ladekreis (423) zum Laden einer dritten Phase des Gleichstrommotors (480) umfasst,
wobei die Umrichter-Elektronik (400) über ein Relais (K103) zur Steuerung eines Umschaltens des ersten Ladekreises (421) zum zweiten (422) und zum dritten Ladekreis (423) verfügt; und
wobei die Umrichter-Elektronik (400) ausgebildet ist, das Umschalten des ersten Ladekreises (421) basierend auf einer Spannungsdifferenz am Relais (K103) zu überwachen.

8. Umrichter-Elektronik (400) nach Anspruch 7,
**dadurch gekennzeichnet, dass**
die Umrichter-Elektronik (400) einen Mikrocontroller (490) umfasst, der ausgebildet ist, die Spannungsdifferenz am Relais (K103) zu bestimmen und auszuwerten.

9. Umrichter-Elektronik (400) nach Anspruch 7 oder 8,
**dadurch gekennzeichnet, dass**
ein erster Kontakt (1201) des Relais (K103) über eine PFC-Drossel (450) mit dem Netzversorgungsschaltkreis (410) gekoppelt ist; und
wobei ein zweiter Kontakt (1202) des Relais (K103) mit dem ersten Gleichstrom-Zwischenspannungsschaltkreis (431) gekoppelt ist.

10. Umrichter-Elektronik (400) nach Anspruch 9,
**dadurch gekennzeichnet, dass**
die Umrichter-Elektronik (400) einen ersten Messschaltkreis (441) zur Netzspannungsmessung am ersten Kontakt (1201) des Relais (K103) und einen zweiten Messschaltkreis (442) zur Netzspannungsmessung am zweiten Kontakt (1202) des Relais (K103) umfasst; und
wobei die Umrichter-Elektronik (400) ausgebildet ist, das Umschalten des ersten Ladekreises (421) basierend auf einer Differenz der mit beiden Messschaltkreisen (441, 442) gemessenen Netzspannungen zu überwachen.

11. Umrichter-Elektronik (400) nach Anspruch 10,
**dadurch gekennzeichnet, dass**
die Umrichter-Elektronik (400) einen dritten Messschaltkreis (443) zur Netzspannungsmessung am zweiten Gleichstrom-Zwischenspannungsschaltkreis (432) umfasst; und
wobei die Umrichter-Elektronik (400) ausgebildet ist, das Umschalten des ersten Ladekreises (421) ferner basierend auf der mit dem dritten Messschaltkreis (443) gemessenen Netzspannung zu überwachen.

12. Umrichter-Elektronik (400) nach Anspruch 11,
**dadurch gekennzeichnet, dass**
die Umrichter-Elektronik (400) einen vierten Messschaltkreis (444) zur Netzspannungsmessung am ersten Gleichstrom-Zwischenspannungsschaltkreis (431) umfasst; und
wobei die Umrichter-Elektronik (400) ausgebildet ist, die mit dem vierten Messschaltkreis (444) gemessene Netzspannung basierend auf der mit dem dritten Messschaltkreis (443) gemessenen Netzspannung zu stabilisieren.

13. Umrichter-Elektronik (400) nach Anspruch 12,
**dadurch gekennzeichnet, dass**
die vier Messschaltkreise (441, 442, 443, 444) jeweils einen Widerstandsteiler (220, 320) zur Bestimmung eines jeweiligen Messwertes der Netzspannung umfassen.

14. Wäschepflegegerät (1600) mit Gleichstrommotor und der Umrichter-Elektronik (400) nach einem der vorstehenden Ansprüche.

## Claims

1. Converter electronics unit (400) for a laundry care appliance (1600) with DC motor (480), wherein the converter electronics unit (400) comprises the following:
a network supply switching circuit (410, 420) for supplying the laundry care appliance with a network voltage;
a first DC intermediate voltage switching circuit (431), which is embodied to rectify the network voltage into a first intermediate circuit voltage for supplying a power level (120) for phase control of the DC motor (480, 130);
a second DC intermediate voltage switching circuit (432) of a switched-mode power supply (470, 310) of the converter electronics unit (400), wherein the switched-mode power supply (470, 310) provides low operating voltages, wherein the second DC intermediate voltage switching circuit (432) is embodied to rectify the network voltage into a second intermediate circuit voltage for supplying the switched-mode power supply (470, 310) to provide operating voltages for a control logic (110) for actuating the power level (120),
**characterised in that** the second DC intermediate voltage switching circuit (432) comprises an intermediate circuit capacitor (331) for smoothing the second intermediate circuit voltage,
wherein the converter electronics unit (400) has a voltage regulator (490), which is embodied to regulate the first DC intermediate voltage switching circuit (431) on the basis of a measurement value of the network voltage (443) and to determine the measurement value of the network voltage (443) on the basis of the intermediate circuit capacitor (331) of the second DC intermediate voltage switching circuit (432).

2. Converter electronics unit (400) according to claim 1,
**characterised in that**
the DC motor (480) is a multiphase motor excited by a permanent magnet, in particular a synchronous motor excited by a permanent magnet, PMSM, or a brushless DC motor, BLDC, and wherein the converter electronics unit (400) comprises an inverter electronics unit for the multiphase motor excited by a permanent magnet.

3. Converter electronics unit (400) according to claim 1 or 2,
**characterised in that**
the voltage regulator is embodied to determine the measurement value of the network voltage (443) both during motor operation and during generator operation of the DC motor (480).

4. Converter electronics unit (400) according to one of the preceding claims,
**characterised in that**
the voltage regulator is embodied to regulate the first DC intermediate voltage switching circuit (431) on the basis of a voltage drop at the intermediate circuit capacitor (331) of the second DC intermediate voltage switching circuit (432).

5. Converter electronics unit (400) according to one of the preceding claims,
**characterised in that**
the converter electronics unit (400) comprises a resistor divider (320), which is embodied to determine a voltage drop at the intermediate circuit capacitor (331) of the second DC intermediate voltage switching circuit (432).

6. Converter electronics unit (400) according to one of the preceding claims,
**characterised in that**
the second DC intermediate voltage switching circuit (432) is electrically decoupled from the first DC intermediate voltage switching circuit (431).

7. Converter electronics unit (400) according to one of the preceding claims,
**characterised in that**
the converter electronics unit (400) comprises a first charging circuit (421) for charging a first phase of the DC motor (480), a second charging circuit (422) for charging a second phase of the DC motor (480) and a third charging circuit (423) for charging a third phase of the DC motor (480),
wherein the converter electronics unit (400) possesses a relay (K103) for controlling a switchover of the first charging circuit (421) to the second (422) and to the third charging circuit (423); and
wherein the converter electronics unit (400) is embodied to monitor the switchover of the first charging circuit (421) on the basis of a voltage difference at the relay (K103).

8. Converter electronics unit (400) according to claim 7,
**characterised in that**
the converter electronics unit (400) comprises a microcontroller (490), which is embodied to determine and evaluate the voltage difference at the relay (K103).

9. Converter electronics unit (400) according to claim 7 or 8,
**characterised in that**
a first contact (1201) of the relay (K103) is coupled to the network supply switching circuit (410) via a PFC choke (450); and
wherein a second contact (1202) of the relay (K103) is coupled to the first DC intermediate voltage switching circuit (431).

10. Converter electronics unit (400) according to claim 9,
**characterised in that**
the converter electronics unit (400) comprises a first measurement switching circuit (441) for network voltage measurement at the first contact (1201) of the relay (K103) and a second measurement switching circuit (442) for network voltage measurement at the second contact (1202) of the relay (K103); and
wherein the converter electronics unit (400) is embodied to monitor the switchover of the first charging circuit (421) on the basis of a difference between the network voltages measured by both measurement switching circuits (441, 442).

11. Converter electronics unit (400) according to claim 10,
**characterised in that**
the converter electronics unit (400) comprises a third measurement switching circuit (443) for network voltage measurement at the second DC intermediate voltage switching circuit (432); and
wherein the converter electronics unit (400) is embodied to monitor the switchover of the first charging circuit (421) furthermore on the basis of the network voltage measured by the third measurement switching circuit (443).

12. Converter electronics unit (400) according to claim 11,
**characterised in that**
the converter electronics unit (400) comprises a fourth measurement switching circuit (444) for network voltage measurement at the first DC intermediate voltage switching circuit (431); and
wherein the converter electronics unit (400) is embodied to stabilise the network voltage measured by the fourth measurement switching circuit (444) on the basis of the network voltage measured by the third measurement switching circuit (443).

13. Converter electronics unit (400) according to claim 12,
**characterised in that**
the four measurement switching circuits (441, 442, 443, 444) each comprise a resistor divider (220, 320) for determining a respective measurement value of the network voltage.

14. Laundry care appliance (1600) with DC motor and the converter electronics unit (400) according to one of the preceding claims.

## Revendications

1. Électronique de convertisseur (400) pour un appareil d'entretien du linge (1600) avec un moteur à courant continu (480), dans laquelle l'électronique de convertisseur (400) comprend ce qui suit :
un circuit d'alimentation électrique (410, 210) pour alimenter l'appareil d'entretien du linge avec une tension du secteur ;
un premier circuit de tension intermédiaire à courant continu (431) conçu pour redresser la tension du secteur en une première tension de circuit intermédiaire pour alimenter un étage de puissance (120) pour la commande de phase du moteur à courant continu (480, 130) ;
un deuxième circuit de tension intermédiaire à courant continu (432) d'une alimentation à découpage (470, 310) de l'électronique de convertisseur (400), dans lequel l'alimentation à découpage (470, 310) fournit des basses tensions de fonctionnement, dans lequel le deuxième circuit de tension intermédiaire à courant continu (432) est formé pour redresser la tension du secteur en une deuxième tension de circuit intermédiaire pour l'alimentation de l'alimentation à découpage (470, 310) pour la fourniture des tensions de fonctionnement à une logique de commande (110) pour commander l'étage de puissance (120) ;
**caractérisée en ce que** le deuxième circuit de tension intermédiaire à courant continu (432) comprend un condensateur de circuit intermédiaire (331) pour lisser la deuxième tension intermédiaire ;
dans laquelle l'électronique de convertisseur (400) présente un régulateur de tension (490) conçu pour réguler le premier circuit de tension intermédiaire à courant continu (431) sur la base d'une valeur mesurée de la tension du secteur (443) et pour déterminer la valeur mesurée de la tension du secteur (443) sur la base du condensateur de circuit intermédiaire (331) du deuxième circuit de tension intermédiaire à courant continu (432).

2. Électronique de convertisseur (400) selon la revendication 1,
**caractérisée en ce que**
le moteur à courant continu (480) est un moteur polyphasé excité par aimant permanent, en particulier un moteur synchrone excité par aimant permanent, PMSM, ou un moteur à courant continu sans balai, BLDC, et dans lequel l'électronique de convertisseur (400) comprend une électronique d'onduleur pour le moteur polyphasé excité par aimant permanent.

3. Électronique de convertisseur (400) selon la revendication 1 ou 2,
**caractérisée en ce que**
le régulateur de tension est conçu pour déterminer la valeur de mesure de la tension du secteur (443) aussi bien en fonctionnement moteur qu'en fonctionnement générateur du moteur à courant continu (480).

4. Électronique de convertisseur (400) selon l'une des revendications précédentes,
**caractérisée en ce que**
le régulateur de tension est conçu pour commander le premier circuit de tension intermédiaire à courant continu (431) sur la base d'une chute de tension au niveau du condensateur de circuit intermédiaire (331) du deuxième circuit de tension intermédiaire à courant continu (432).

5. Électronique de convertisseur (400) selon l'une des revendications précédentes,
**caractérisée en ce que**
l'électronique de convertisseur (400) comprend une résistance de division (320) adaptée pour déterminer une chute de tension au niveau du condensateur de circuit intermédiaire (331) du deuxième circuit de tension intermédiaire à courant continu (432).

6. Électronique de convertisseur (400) selon l'une des revendications précédentes,
**caractérisée en ce que**
le deuxième circuit de tension intermédiaire à courant continu (432) est électriquement découplé du premier circuit de tension intermédiaire à courant continu (431).

7. Électronique de convertisseur (400) selon l'une des revendications précédentes,
**caractérisée en ce que**
l'électronique de convertisseur (400) comprend un premier circuit de charge (421) pour charger une première phase du moteur à courant continu (480), un deuxième circuit de charge (422) pour charger une deuxième phase du moteur à courant continu (480) et un troisième circuit de charge (423) pour charger une troisième phase du moteur à courant continu (480) ;
dans laquelle l'électronique de convertisseur (400) comprend un relais (K103) pour commander une commutation du premier circuit de charge (421) vers le deuxième (422) et le troisième circuit de charge (423) ; et
dans laquelle l'électronique de convertisseur (400) est conçue pour surveiller la commutation du premier circuit de charge (421) sur la base d'une différence de tension au niveau du relais (K103).

8. Électronique de convertisseur (400) selon la revendication 7,
**caractérisée en ce que**
l'électronique de convertisseur (400) comprend un microcontrôleur (490) qui est conçu pour déterminer et évaluer la différence de tension au niveau du relais (K103).

9. Électronique de convertisseur (400) selon la revendication 7 ou 8,
**caractérisée en ce que**
un premier contact (1201) du relais (K103) est couplé au circuit d'alimentation électrique (410) par l'intermédiaire d'une bobine d'arrêt PFC (450) ; et dans laquelle un deuxième contact (1202) du relais (K103) est couplé au premier circuit de tension intermédiaire à courant continu (431).

10. Électronique de convertisseur (400) selon la revendication 9,
**caractérisée en ce que**
l'électronique de convertisseur (400) comprend un premier circuit de mesure (441) pour mesurer la tension du secteur au premier contact (1201) du relais (K103) et un deuxième circuit de mesure (442) pour mesurer la tension du secteur au deuxième contact (1202) du relais (K103) ; et
dans laquelle l'électronique de convertisseur (400) est conçue pour surveiller la commutation du premier circuit de charge (421) sur la base d'une différence entre les tensions de secteur mesurées par les deux circuits de mesure (441, 442).

11. Électronique de convertisseur (400) selon la revendication 10,
**caractérisée en ce que**
l'électronique de convertisseur (400) comprend un troisième circuit de mesure (443) pour mesurer la tension du secteur sur le deuxième circuit de tension intermédiaire à courant continu (432) ; et
dans laquelle l'électronique de convertisseur (400) est conçue pour surveiller la commutation du premier circuit de charge (421) sur la base, en outre, de la tension du secteur mesurée par le troisième circuit de mesure (443).

12. Électronique de convertisseur (400) selon la revendication 11,
**caractérisée en ce que**
l'électronique de convertisseur (400) comprend un quatrième circuit de mesure (444) pour mesurer la tension du secteur sur le premier circuit de tension intermédiaire à courant continu (431) ; et
dans laquelle l'électronique de convertisseur (400) est conçue pour stabiliser la tension du secteur mesurée par le quatrième circuit de mesure (444) en fonction de la tension du secteur mesurée par le troisième circuit de mesure (443).

13. Électronique de convertisseur (400) selon la revendication 12,
**caractérisée en ce que**
les quatre circuits de mesure (441, 442, 443, 444) comprennent chacun une résistance de division (220, 320) pour déterminer une valeur de mesure respective de la tension du secteur.

14. Appareil d'entretien du linge (1600) avec moteur à courant continu et électronique de convertisseur (400) selon l'une des revendications précédentes.
